# EUROPEAN PATENT SPECIFICATION

(11) **EP 4 278 835 B1**
(45) Date of publication and mention of the grant of the patent: **09.12.2026**
(21) Application number: 22712503.6
(22) Date of filing: 18.01.2022
(51) Int. Cl.: H04W 74/08, H04W 72/00, H04L 1/18, H04L 5/00

(54) **TECHNIQUE FOR USING CHANNEL OCCUPANCY TIME**
VERFAHREN ZUR VERWENDUNG DER KANALBELEGUNGSZEIT
TECHNIQUE D'UTILISATION DU TEMPS D'OCCUPATION DE CANAL

(30) Priority: 18.01.2021 WO PCT/SE2021/050026
(43) Date of publication of application: 22.11.2023
(60) Divisional application: 26213456.2
(73) Proprietor: Telefonaktiebolaget LM Ericsson (publ), 164 83 Stockholm (SE)
(72) Inventor: SINGH, Bikramjit, 10520 Raasepori (FI); FALAHATI, Sorour, 112 29 Stockholm (SE)
(74) Representative: Ericsson
(86) International application number: PCT/EP2022/051050
(87) International publication number: WO 2022/152947

(56) References cited:
- QUALCOMM INCORPORATED: "uplink enhancements for URLLC in unlicensed controlled environments", vol. RAN WG1, no. e-Meeting; 20201026 - 20201113, 24 October 2020 (2020-10-24), XP051946922, Retrieved from the Internet <URL:https://ftp.3gpp.org/tsg_ran/WG1_RL1/TSGR1_103-e/Docs/R1-2009259.zip R1-2009259 Uplink enhancements for URLLC in unlicensed controlled environments.docx> [retrieved on 20201024]
- SAMSUNG: "Enhancements for unlicensed band URLLC/IIoT", vol. RAN WG1, no. e-Meeting; 20201026 - 20201113, 23 October 2020 (2020-10-23), XP051945338, Retrieved from the Internet <URL:https://ftp.3gpp.org/tsg_ran/WG1_RL1/TSGR1_103-e/Docs/R1-2008161.zip R1-2008161_Enhancements for unlicensed band URLLC IIoT.docx> [retrieved on 20201023]
- FUTUREWEI: "UE initiated COT for FFP", vol. RAN WG1, no. eMeeting; 20201026 - 20201113, 23 October 2020 (2020-10-23), XP051945276, Retrieved from the Internet <URL:https://ftp.3gpp.org/tsg_ran/WG1_RL1/TSGR1_103-e/Docs/R1-2007551.zip R1-2007551.docx> [retrieved on 20201023]
- LG ELECTRONICS: "Discussion on unlicensed band URLLC/IIOT", vol. RAN WG1, no. e-Meeting; 20201026 - 20201113, 24 October 2020 (2020-10-24), XP051946561, Retrieved from the Internet <URL:https://ftp.3gpp.org/tsg_ran/WG1_RL1/TSGR1_103-e/Docs/R1-2008059.zip R1-2008059_URLLC FBE_Final.docx> [retrieved on 20201024]

## Description

### Technical Field

The present disclosure relates to a technique for using a channel occupancy time. More specifically, and without limitation, methods and devices are provided for radio communicating between a radio device and a network node using temporal radio resources associated with channel occupancy times.

### Background

Ultra-reliable and low latency communication (URLLC) is one of the main use cases of 5G new radio (NR). URLLC has strict requirements on transmission reliability and latency, i.e., 99.9999% reliability within 1 ms one-way latency. In NR Release 15, several new features and enhancements were introduced to support these requirements. In Release 16, standardization works are focused on further enhancing URLLC system performance as well as ensuring reliable and efficient coexistence of URLLC and other NR use cases. One example scenario is when both enhanced mobile broadband (eMBB) and URLLC UEs co-exist in the same cell. Here, mainly two approaches have been identified to support multiplexing/prioritization.

In addition to operation in licensed bands, NR has been enhanced in 3GPP Release 16 (RP-190706, Revised WID on NR-based Access to Unlicensed Spectrum) to allow operation in unlicensed bands, i.e., **NR-unlicensed (NR-U).** Allowing unlicensed networks, i.e., networks that operate in unlicensed or shared spectrum to effectively use the available spectrum is an attractive approach to increase system capacity. For convenience, we will in the following only mention unlicensed spectrum to refer to both unlicensed and shared spectrum.

The Third Generation Partnership Project (3GPP) has specified techniques for radio communication between radio devices (e.g., user equipments, UEs) and network nodes (e.g., a gNB) of a radio access network on shared spectrum such as unlicensed spectrum. In Release 17, 3GPP agreed to have UE-initiated COT in addition to gNB-initiated COT. However, this may cause ambiguities as to which COT is to be used in the radio communication, e.g., since relevant time resources may overlap in time.

3GPP Tdoc R1-2009259 discusses uplink enhancements for URLLC in unlicensed
controlled environments, specifically to specify support for UE- initiated COT for FBE with
minimum specification effort and harmonizing UL configured -grant enhancements in NR-U and
URLLC introduced in Rel -16 to be applicable for unlicensed spectrum .

3GPP Tdoc R1-2007551 discusses UE initiated COT for FFP and considers enhancements
required to enable efficient support of URLLC in unlicensed spectrum.

3GPP Tdoc R1-2008059 discusses unlicensed band URLLC/IIOT and provides views on
UL enhancements for URLLC in unlicensed controlled environments, in terms of supporting UEinitiated
COT for FBE based U-band operation and harmonizing CG features in Rel -16 URLLC and
NR-U .

3GPP Tdoc R1-208161 discusses enhancements for unlicensed band URLLC/IIoT and how
to support UE-initiated COT and provides analysis of potential modification to harmonize UL
configured-grant in NR- U and URLLC.

### Summary

Accordingly, there is a need for a radio communication technique that resolves ambiguities in the presence of channel occupancy times initiated by radio devices as well as network nodes.

Embodiments of the technique may define, e.g., how to select a COT for transmission by the radio device, and/or how the network knows which COT of the radio device is being used, and/or an interaction between the first COT (e.g., UE-initiated COT) and other UEs.

The technique may be implemented as an extension of 3GPP Release 16 (defining only gNB-initiated COT) and/or based on 3GPP Release 17 (defining UE-initiated COT as well on top of gNB-initiated COT). The embodiments can avoid confusion caused by this coexistence.

The technique may be implemented for interaction between UE-initiated COT and gNB-initiated COT.

The technique may be implemented based on or in extension of 3GPP RAN1 NR-U, e.g., according to 3GPP Release 17.

The technique may be applied for New Radio in unlicensed spectrum (NR-U), channel occupancy, frame-based equipment (FBE), and/or using idle period.

The scope of protection of the invention is defined in the appended set of claims.

### Brief Description of the Drawings

Further details of embodiments of the technique are described with reference to the enclosed drawings, wherein:
Fig. 1 shows a schematic block diagram of an embodiment of a device for radio communicating with a network node;
Fig. 2 shows a schematic block diagram of an embodiment of a device for radio communicating with a radio device;
Fig. 3 shows a flowchart for a method of radio communicating with a network node, which method may be implementable by the device of Fig. 1;
Fig. 4 shows a flowchart for a method of radio communicating with a radio device, which method may be implementable by the device of Fig. 2;
Fig. 5 schematically illustrates examples channel occupancy times and associated idle periods in fixed frame periods usable by embodiments of the devices of Figs. 1 and 2 for performing the methods of Figs. 3 and 4, respectively;
Fig. 6 schematically illustrates examples of transmissions according to a configured grant usable by embodiments of the devices of Figs. 1 and 2 for performing the methods of Figs. 3 and 4, respectively;
Fig. 7 schematically illustrates an example of overlapping idle periods associated with channel occupancy times initiated by embodiments of the devices of Figs. 1 and 2 for performing the methods of Figs. 3 and 4, respectively;
Fig. 8 schematically illustrates an example of a transmission by an embodiment of the device of Fig. 2 in a channel occupancy time initiated by an embodiment of the device of Fig. 1 for performing the methods of Figs. 3 and 4, respectively;
Fig. 9 schematically illustrates an example of a transmission by an embodiment of the device of Fig. 1 for initiating a channel occupancy time or within a channel occupancy time initiated by an embodiment of the device of Fig. 2 for performing the methods of Figs. 3 and 4, respectively;
Fig. 10 shows a schematic block diagram of a radio device embodying the device of Fig. 1;
Fig. 11 shows a schematic block diagram of a network node embodying the device of Fig. 2;
Fig. 12 schematically illustrates an example telecommunication network connected via an intermediate network to a host computer;
Fig. 13 shows a generalized block diagram of a host computer communicating via a base station or radio device functioning as a gateway with a user equipment over a partially wireless connection; and
Figs. 14 and 15 show flowcharts for methods implemented in a communication system including a host computer, a base station or radio device functioning as a gateway and a user equipment.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details. Moreover, while the following embodiments are primarily described for a New Radio (NR) or 5G implementation, it is readily apparent that the technique described herein may also be implemented for any other radio communication technique, including a Wireless Local Area Network (WLAN) implementation according to the standard family IEEE 802.11, 3GPP LTE (e.g., LTE-Advanced or a related radio access technique such as MulteFire), for Bluetooth according to the Bluetooth Special Interest Group (SIG), particularly Bluetooth Low Energy, Bluetooth Mesh Networking and Bluetooth broadcasting, for Z-Wave according to the Z-Wave Alliance or for ZigBee based on IEEE 802.15.4.

Moreover, those skilled in the art will appreciate that the functions, steps, units and modules explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the invention may also be embodied in a computer program product as well as in a system comprising at least one computer processor and memory coupled to the at least one processor, wherein the memory is encoded with one or more programs that may perform the functions and steps or implement the units and modules disclosed herein.

The radio communication may depend on the determinations in accordance with rules (e.g., restrictions) that are defined for the radio device to select the second COT (e.g., a gNB-initiated COT) or the first COT (e.g., a UE-initiated COT) for the radio communication, e.g., a radio transmission.

Herein, any radio communication, transmission or reception may relate to a channel or carrier controlled (e.g., scheduled) by the network node.

Any embodiment may be implemented based on, or as an extension of, 3GPP document TS 38.213, version 16.4.0, and/or 3GPP document TS 38.214, version 16.4.0

The radio communicating may further relate to a sidelink (SL) between the radio device and another radio device.

At least some method embodiments, the network node may be a relay radio device.

Without limitation, for example in a 3GPP implementation, any "radio device" may be a user equipment (UE).

The technique may be applied in the context of 3GPP New Radio (NR). Unlike a SL according to 3GPP LTE, a SL according to 3GPP NR can provide a wide range of QoS levels. Therefore, at least some embodiments of the technique can ensure that the relay radio appropriate for the QoS of the traffic is selected.

The technique may be implemented in accordance with a 3GPP specification, e.g., for 3GPP Release 17. The technique may be implemented for 3GPP LTE or 3GPP NR according to a modification of the 3GPP document TS 23.303, version 16.0.0 or for 3GPP NR according to a modification of the 3GPP document TS 33.303, version 16.0.0.

The QoS indicated in the at least one control message may replace or modify existing rules for bearer selection. For example, for traffic that is unicasted in the UL, the relay radio device may use UL traffic flow templates (TFTs) to select UL bearers of an evolved packet system (EPS) for relayed UL packets independently from a ProSe Per Packet Priority applied over PC5 by remote radio devices, e.g., according to 3GPP document TS 23.303, version 16.0.0, clause 5.4.6.2. The at least one control message may comprise a control message transmitted from the relay radio device to the remote radio device, which is indicative of the QoS used according to the TFTs. Alternatively or in addition, the at least one control message may comprise a control message transmitted from the remote radio device to the relay radio device to, which is indicative of the QoS that overrules, e.g., a TFT-based selection.

For traffic that is unicasted in the DL, the relay radio device may map a QoS class identifier (QCI) of the EPS bearer into a ProSe Per-Packet Priority value to be applied for the DL relayed unicast packets over the interface PC5, e.g., according to 3GPP document TS 23.303, version 16.0.0, clause 5.4.6.2. The mapping rules may be provisioned in the relay radio device. The at least one control message may comprise a control message transmitted from the relay radio device to the remote radio device, which is indicative of the QoS used according to the QCI. Alternatively or in addition, the at least one control message may comprise a control message transmitted from the remote radio device to the relay radio device to, which is indicative of the QoS that overrules the QCI of the EPS bearer, e.g., by requesting a further EPS bearer.

In any radio access technology (RAT), the technique may be implemented for SL relay selection. The SL may be implemented using proximity services (ProSe), e.g. according to a 3GPP specification.

Any radio device may be a user equipment (UE), e.g., according to a 3GPP specification. The relay radio device may also be referred to as a relay UE (or briefly: relay). Alternatively or in addition, the remote radio device may also be referred to as a remote UE. Alternatively or in addition, the further radio device may also be referred to as a further UE.

The relay radio device and the RAN may be wirelessly connected in an uplink (UL) and/or a downlink (DL) through a Uu interface. Alternatively or in addition, the SL may enable a direct radio communication between proximal radio devices, e.g., the remote radio device and the relay radio device, optionally using a PC5 interface. Services provided using the SL or the PC5 interface may be referred to as proximity services (ProSe). Any radio device (e.g., the remote radio device and/or the relay radio device and/or the further radio device) supporting a SL may be referred to as ProSe-enabled radio device.

The relay radio device may also be referred to as ProSe UE-to-Network Relay.

The remote radio device and/or the relay radio device and/or the RAN and/or the further remote radio device may form, or may be part of, a radio network, e.g., according to the Third Generation Partnership Project (3GPP) or according to the standard family IEEE 802.11 (Wi-Fi). The first method aspect, the second method aspect and third method aspect may be performed by one or more embodiments of the remote radio device, the relay radio device and the RAN (e.g., a base station) or the further remote radio device, respectively.

The RAN may comprise one or more base stations, e.g., performing the third method aspect. Alternatively or in addition, the radio network may be a vehicular, *ad hoc* and/or mesh network comprising two or more radio devices, e.g., acting as the remote radio device and/or the relay radio device and/or the further remote radio device.

Any of the radio devices may be a 3GPP user equipment (UE) or a Wi-Fi station (STA). The radio device may be a mobile or portable station, a device for machine-type communication (MTC), a device for narrowband Internet of Things (NB-IoT) or a combination thereof. Examples for the UE and the mobile station include a mobile phone, a tablet computer and a self-driving vehicle. Examples for the portable station include a laptop computer and a television set. Examples for the MTC device or the NB-IoT device include robots, sensors and/or actuators, e.g., in manufacturing, automotive communication and home automation. The MTC device or the NB-IoT device may be implemented in a manufacturing plant, household appliances and consumer electronics.

Whenever referring to the RAN, the RAN may be implemented by one or more base stations (as examples of the network node).

The radio device may be wirelessly connected or connectable (e.g., according to a radio resource control, RRC, state or active mode) with the relay radio device and, optionally, at least one base station of the RAN.

The base station may encompass any station that is configured to provide radio access to any of the radio devices. The base stations may also be referred to as cell, transmission and reception point (TRP), radio access node or access point (AP). The base station and/or the relay radio device may provide a data link to a host computer providing the user data to the remote radio device or gathering user data from the remote radio device. Examples for the base stations may include a 3G base station or Node B, 4G base station or eNodeB, a 5G base station or gNodeB, a Wi-Fi AP and a network controller (e.g., according to Bluetooth, ZigBee or Z-Wave).

The RAN may be implemented according to the Global System for Mobile Communications (GSM), the Universal Mobile Telecommunications System (UMTS), 3GPP Long Term Evolution (LTE) and/or 3GPP New Radio (NR).

Any aspect of the technique may be implemented on a Physical Layer (PHY), a Medium Access Control (MAC) layer, a Radio Link Control (RLC) layer, a packet data convergence protocol (PDCP) layer, and/or a Radio Resource Control (RRC) layer of a protocol stack for the radio communication.

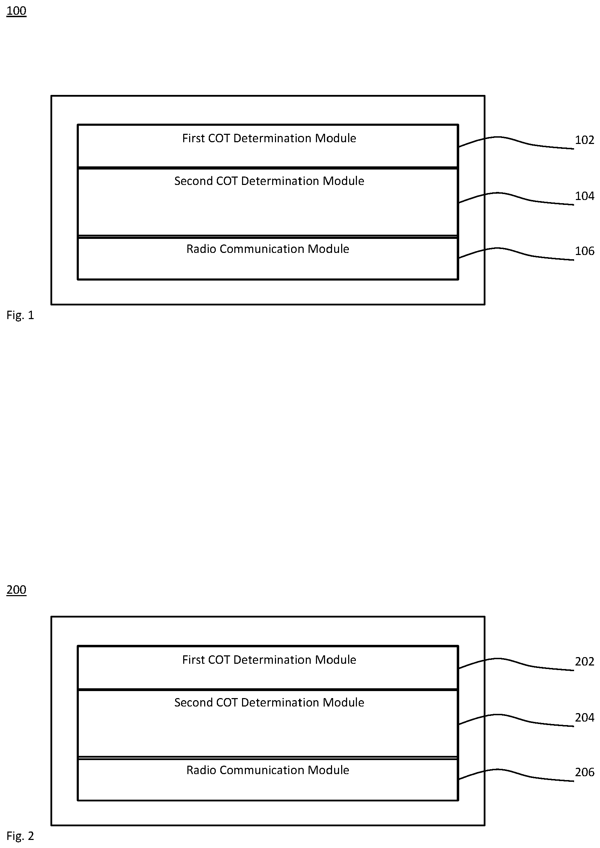

Fig. 1 schematically illustrates a block diagram of an embodiment of a device for radio communicating between a radio device and a network node of a radio access network (RAN) using a temporal radio resource associated with a channel occupancy time (COT). The device is generically referred to by reference sign 100.

The device 100 may comprise a first COT determination module 102 for determining if (e.g., that or whether) a first COT is (e.g., has been) initiated by the radio device.

Alternatively or in addition, the device 100 further comprises second COT determination module 104 for determining if (e.g., that or whether) a second COT is (e.g., has been) initiated by the network node.

Alternatively or in addition, a radio communication module 106 communicates with the network node and/or another radio device in the temporal radio resource associated with the first COT or the second COT depending on the determinations.

Any of the modules of the device 100 may be implemented by units configured to provide the corresponding functionality.

The device 100 may also be referred to as, or may be embodied by, the radio device (or briefly: UE). The UE 100 and the network node may be in direct radio communication, e.g., at least for one of the modules. The network node may be embodied by the below device 200.

Fig. 2 schematically illustrates a block diagram of an embodiment of a device for radio communicating between a radio device and a network node of a radio access network (RAN) using a temporal radio resource associated with a channel occupancy time (COT). The device is generically referred to by reference sign 200.

The device 200 may comprise a first COT determination module 202 for determining if (e.g., that or whether) a first COT is (e.g., has been) initiated by the radio device.

Alternatively or in addition, the device 100 further comprises a second COT determination module 204 for determining if (e.g., that or whether) a second COT is (e.g., has been) initiated by the network node.

Alternatively or in addition, a radio communication module 206 communicates with the radio device and/or another radio device in the temporal radio resource associated with the first COT or the second COT depending on the determinations.

Any of the modules of the device 200 may be implemented by units configured to provide the corresponding functionality.

The device 200 may also be referred to as, or may be embodied by, the network node (e.g., a base station such as a gNB). The network node 100 and the radio device (or briefly: UE) may be in direct radio communication, e.g., at least for one of the modules. The radio device may be embodied by the above device 100.

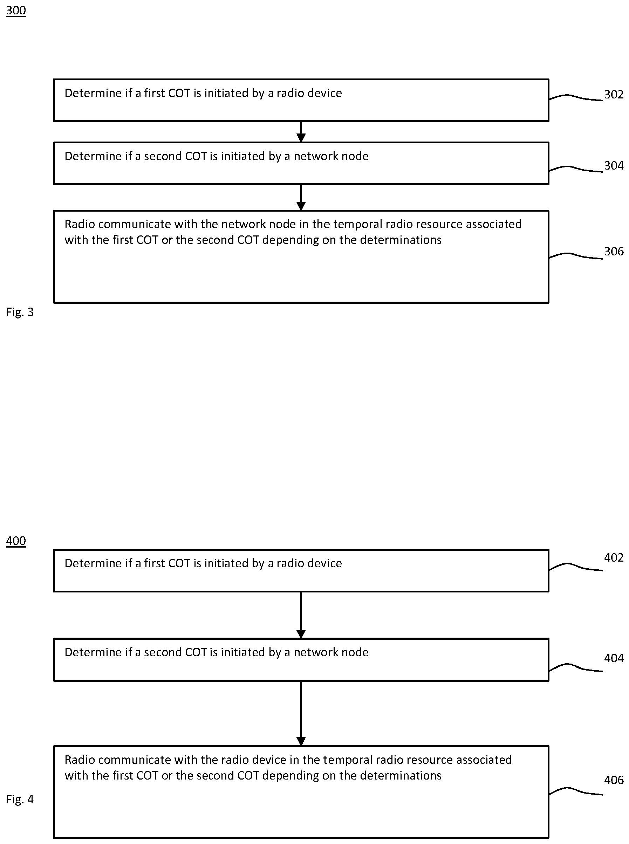

Fig. 3 shows an example flowchart for a method 300 according to the first method aspect and/or any one of the claims 1 to 33.

The method 300 may be performed by the device 100. For example, the modules 102, 104 and 106 may perform the steps 302, 304 and 306, respectively.

Fig. 4 shows an example flowchart for a method 300 according to the first method aspect and/or any one of the claims 34 to 43.

The method 400 may be performed by the device 200. For example, the modules 202, 204 and 206 may perform the steps 402, 404 and 406, respectively.

In any aspect, the technique may be applied to uplink (UL), downlink (DL) or direct communications between radio devices, e.g., device-to-device (D2D) communications or sidelink (SL) communications.

Each of the radio device 100 and network nod 200 may be a radio device or a base station. Herein, any radio device may be a mobile or portable station and/or any radio device wirelessly connectable to a base station or RAN, or to another radio device. For example, the radio device may be a user equipment (UE), a device for machine-type communication (MTC) or a device for (e.g., narrowband) Internet of Things (IoT). Two or more radio devices may be configured to wirelessly connect to each other, e.g., in an *ad hoc* radio network or via a 3GPP SL connection. Furthermore, any base station may be a station providing radio access, may be part of a radio access network (RAN) and/or may be a node connected to the RAN for controlling the radio access. For example, the base station may be an access point, for example a Wi-Fi access point.

Herein, whenever referring to noise or a signal-to-noise ratio (SNR), a corresponding step, feature or effect is also disclosed for noise and/or interference or a signal-to-interference-and-noise ratio (SINR).

Any of the embodiments may implement URLLC.

Ultra-reliable and low latency communication (URLLC) is one of the main use cases of 5G new radio (NR). URLLC has strict requirements on transmission reliability and latency, i.e., 99.9999% reliability within 1 ms one-way latency. In NR Release 15, several new features and enhancements were introduced to support these requirements. In Release 16, standardization works are focused on further enhancing URLLC system performance as well as ensuring reliable and efficient coexistence of URLLC and other NR use cases. One example scenario is when both enhanced mobile broadband (eMBB) and URLLC UEs co-exist in the same cell. Here, mainly two approaches have been identified to support multiplexing/prioritization.

Any of the embodiments may implement NR-U.

In addition to operation in licensed bands, NR has been enhanced in 3GPP Release 16 (RP-190706, Revised WID on NR-based Access to Unlicensed Spectrum) to allow operation in unlicensed bands, i.e., **NR-unlicensed (NR-U).** Allowing unlicensed networks, i.e., networks that operate in unlicensed or shared spectrum to effectively use the available spectrum is an attractive approach to increase system capacity. For convenience, we will in the following only mention unlicensed spectrum to refer to both unlicensed and shared spectrum.

Although it is more challenging to match the qualities of the licensed regime on unlicensed spectrum, solutions that allow an efficient use of it as a complement to licensed deployments have the potential to bring great value to the 3GPP operators, and, ultimately, to the 3GPP industry as a whole. Some features in NR need to be adapted to comply with the special characteristics of the unlicensed band as well as also different regulations. Further, if a UE intended to use unlicensed spectrum, it may employ Clear Channel Assessment (CCA) schemes to find out whether the channel is free or not over a certain period. One such technique is Listen Before Talk (LBT). There are many different flavors of LBT, depending on which channel access mode the device uses and which type of data it wants to transmit in the upcoming transmission opportunity, referred to as channel occupancy time (COT). Common for all flavors is that the sensing is done in a particular channel (corresponding to a defined carrier frequency) and over a predefined bandwidth. Further, two modes of access operations are defined - Frame-Based Equipment (FBE) and Load-Based Equipment (LBE). In FBE mode, the sensing period is simple, while the sensing scheme in LBE mode is more complex.

Any of the embodiments may implement semi-static channel occupancy (FBE mode).

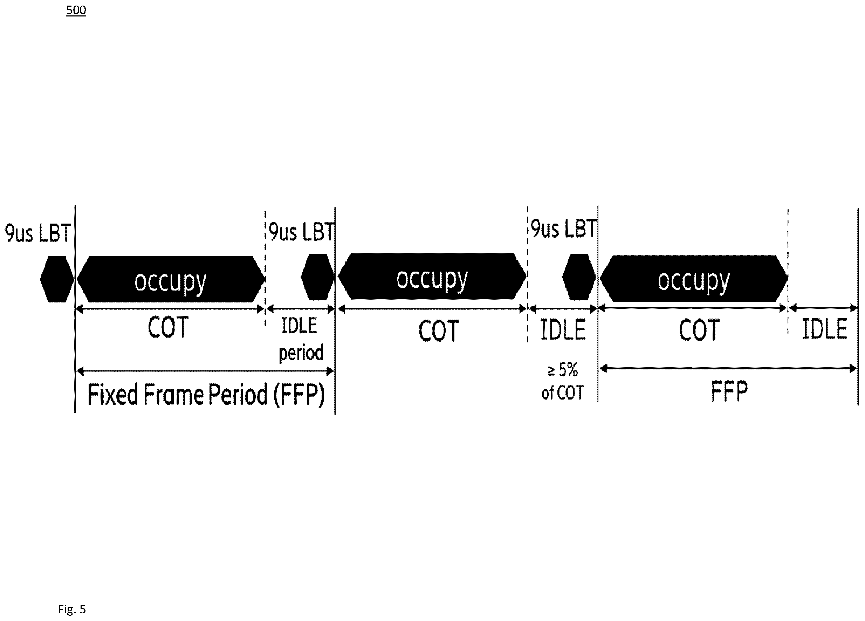

In FBE mode as defined in 3GPP Release 16 and illustrated in Fig. 5, the gNB assigns Fixed Frame Periods (FFPs), senses the channel for 9 µs (9 microseconds) just before the FFP boundary, and if the channel is sensed to be free, it starts with a downlink transmission. With the DL transmission at the beginning of an FFP, the gNB has initiated a COT during that FFP. The gNB can share this COT with UEs for uplink transmissions configured or scheduled for the UEs or other DL transmissions. If the gap between consecutive transmissions are more than 16 µs (16 microseconds), a 9 µs (9 microseconds) successful sensing is required before a transmission in the COT.

In each FFP, DL/UL transmissions are only allowed within a subset of time resources of the FFP, wherein the remaining time at the end of the FFP is reserved so that other nodes also have the chance to sense and utilize the channel. The reserved time at the end of each FFP is referred to as idle period.

This procedure can be repeated with a certain periodicity. Hence in FBE operations, the channel is sensed at specific intervals just before the FFP boundary. The FFP can be set to values between 1 and 10 ms and can be changed after a minimum of 200 ms. The IDLE period is a regulatory requirement and is supposed to be at least T_{IDLE} ≥ max(0.05*COT, 100 us). In 3GPP TS 37.213 this has been simplified to be T_{IDLE} ≥ max(0.05*FFP, 100 us), i.e. the maximum channel occupancy time, MCOT, would be defined as T_{MCOT} = min(0.95*FFP, FFP-0.1ms). So for 10 ms FFP, the MCOT would be 9.5 ms, while for 1 ms FFP the MCOT would be 0.9 ms = 0.9*FFP.

Fig. 5 schematically illustrates an example of FBE procedure depicting 3GPP semi-static channel occupancy [e.g., according to ETSI harmonized standard EN 301 893 Section 4.2.7.3.1].

The FBE mode supported in Release 16 is referred to as "gNB-initiated COT", wherein a DL transmission at the beginning of an FFP determines that the FFP before the corresponding idle period can be used by gNB and UE to DL and UL transmissions, respectively. In this manner, gNB is "initiating" the COT and UEs are "sharing" the COT that is initiated by gNB.

In Release 17, 3GPP supports "UE-initiated COT" in addition to gNB-initiated COT. The details of the procedure is under discussion while the same principle as gNB initiated COT is applicable. That implies that a UE would be associated with an FFB that might be same or different from the gNB FFP. If the UE transmits a UL transmission at the beginning of FFP after successfully sensing the channel for 9 µs (9 microseconds), the UE has initiated a COT in that the FFP can be shared with the gNB.

Any of the embodiments may implement a dynamic channel occupancy (LBE mode).

The default LBT mechanism for LBE operation, LBT category 4, is similar to existing Wi-Fi operation, where a node can sense the channel at any time and start transmitting if the channel is free after a deferral and backoff period. For specific cases, e.g. shared COT, other LBT categories allowing a very short sensing period, are allowed.

Any of the embodiments may implement LBT channels in wideband operation mode.

There are different wideband operation modes. The nodes perform LBT on a certain bandwidth referred to as LBT channel, which are up to 20 MHz. The transmission bandwidth is therefore also limited by the LBT bandwidth. The channels can however be aggregated in wideband operation modes using either carrier aggregation or using one wideband carrier which is divided into several so-called resource block sets, RB set (also referred to as LBT bandwidth or LBT subband). In either modes the LBT can be performed according to one of the following procedures: (1) independent CAT4 LBT on each of the carriers, (2) on primary carrier performs CAT4 LBT, and sensing for a fixed CCA on the remaining carries just before the end of the CAT4 LBT on the primary carrier.

Any of the embodiments may implement a Configured Grant (CG), e.g., in NR-U.

### A brief description of configured grant in NR-U

Same as in NR, a UE in NR-Unlicensed (NR-U) can be semi-statically scheduled for uplink transmission based on Type 1 or Type 2 configured grant. There have been specific enhancements in configured grant related to time-domain resource allocation, configured grant UCI (CG-UCI), and autonomous uplink (AUL) transmission.

### CG re-transmission timer

In NR-U a new timer is introduced named as CG re-transmission timer (CGRT). This timer can be used for autonomous uplink transmission (AUL). There is also another timer *configuredGrantTimer* (CGT). CGT limits maximum AUL retransmission attempts for a HARQ process. When the CGT expires the UE should flush the HARQ buffer for this HARQ process and transmit new data associated to it (e.g., associated to the HARQ process).

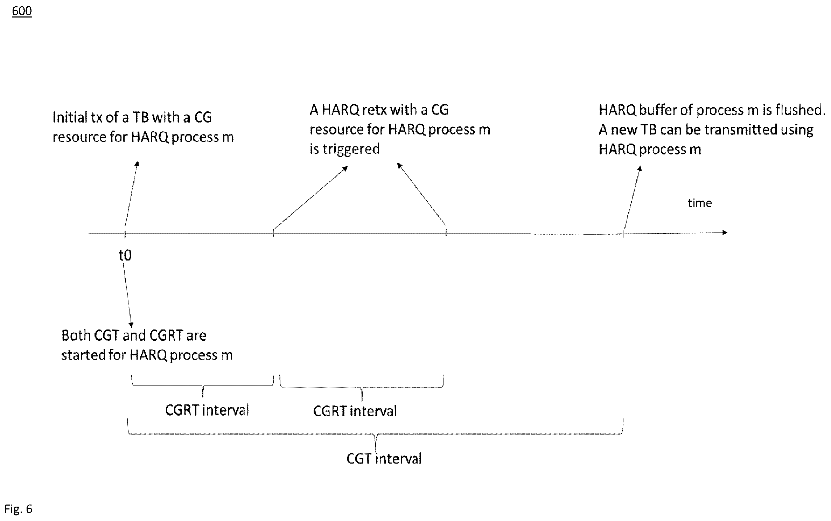

Fig. 6 schematically illustrates a timeline for simultaneously starting a CG timer (CGT) and a CG re-transmission timer (CGRT).

As stated in 3GPP document TS 38.321, version 16.3.0, clause 5.8.2, there are three types of transmission without dynamic grant:
- for a configured grant Type 1, an uplink grant is provided by RRC, and stored as configured uplink grant;
- for a configured grant Type 2, an uplink grant is provided by PDCCH, and stored or cleared as configured uplink grant based on L1 signalling indicating configured uplink grant activation or deactivation;
- retransmissions on a stored configured uplink grant of Type 1 or Type 2 configured with *cg-RetransmissionTimer* (e.g., triggered by expiry of the *cg-RetransmissionTimer*).

The 3GPP document TS 38.321, version 16.0.0, specifies:

"For configured uplink grants neither configured with *harg-ProcID-Offset2* nor with *cg-RetransmissionTimer,* the HARQ Process ID associated with the first symbol of a UL transmission is derived from the following equation:$HARQ Process ID = \left[floor\left(CURRENT_symbol/periodicity\right)\right] modulo nrofHARQ - Processes$

For configured uplink grants with *harq-ProcID-Offset2,* the HARQ Process ID associated with the first symbol of a UL transmission is derived from the following equation: $\begin{matrix}HARQ Process ID \\ = \left[floor\left(CURRENT_symbol/periodicity\right)\right] modulo nrofHARQ - Processes + harq - ProcID - \\ Offset 2\end{matrix}$ wherein $\begin{matrix}CURRENT_symbol \\ = \left(\begin{matrix}SFN \times numberOfSlotsPerFrame \times numberOfSymbolsPerSlot + slot number in the \\ frame \times numberOfSymbolsPerSlot + symbol number in the slot\end{matrix}\right) ,\end{matrix}$ and *numberOfSlotsPerFrame* and *numberOfSymbolsPerSlot* refer to the number of consecutive slots per frame and the number of consecutive symbols per slot, respectively as specified in 3GPP document TS 38.211, version 16.4.0.

For configured uplink grants configured with *cg-RetransmissionTimer,* the UE implementation select an HARQ Process ID among the HARQ process IDs available for the configured grant configuration. The UE shall prioritize retransmissions before initial transmissions. The UE shall toggle the NDI in the CG-UCI for new transmissions and not toggle the NDI in the CG-UCI in retransmissions."

Clause 5.4.2.1 in 3GPP document TS 38.321, version 16.0.0, specifies:
For configured uplink grants configured with *cg-RetransmissionTimer,* the redundancy version zero is used for initial transmissions and UE implementation selects redundancy version for retransmissions.

### CG-UCI

CG-UCI is included in every CG-PUSCH transmission and includes the information listed in below Table 1. CG-UCI is mapped as per rules of Release 15 with CG-UCI having the highest priority. It is mapped on the symbols starting after first DMRS symbol. To determine the number of REs used for CG-UCI, the mechanism of beta-offset in Release 15 of NR for HARQ-ACK on CG-PUSCH is reused. Nonetheless, a new (e.g., CG-UCI-specific) RRC-configured beta-offset for CG-UCI is defined.

**Table 1: CG-UCI content**

| **UCI content** |
|---|
| HARQ |
| RV |
| NDI |
| COT sharing information |
| CRC |

If CG-PUSCH resources overlap with PUCCH carrying CSI-part 1 and/or CSI-part 2, the later can be sent on CG-PUSCH. RRC configuration can be provided to the UE indicating whether to multiplex CG-UCI and HARQ-ACK. If configured, in the case of PUCCH overlapping with one or more CG-PUSCHs within a PUCCH group, the CG-UCI and HARQ-ACK are jointly encoded as one UCI type. Otherwise, configured grant PUSCH is skipped if CG-PUSCH overlaps with PUCCH that carries HARQ ACK feedback.

### Downlink feedback information (DFI)

To reduce the signaling overhead corresponding to explicit feedback transmission, NR-U supports an enhanced DCI format 0_1 for indicating downlink feedback information ("CG-DFI"), that carry HARQ-ACK bitmap for all UL HARQ processes from the same UE. Additionally, the gNB may trigger an adaptive retransmission using a dynamic grant.

In section 6.1 of the 3GPP document TS 38.214, version 16.1.0, it is stated that

"If a UE receives an ACK for a given HARQ process in CG-DFI in a PDCCH ending in symbol *i* to terminate a transport block repetition in a PUSCH transmission on a given serving cell with the same HARQ process after symbol *i*, the UE is expected to terminate the repetition of the transport block in a PUSCH transmission starting from a symbol *j* if the gap between the end of PDCCH of symbol *i* and the start of the PUSCH transmission in symbol *j* is equal to or more than *N2* symbols. The value *N2* in symbols is determined according to the UE processing capability defined in Clause 6.4, and *N2* and the symbol duration are based on the minimum of the subcarrier spacing corresponding to the PUSCH and the subcarrier spacing of the PDCCH indicating CG-DFI."

Any of the embodiments may implement a DL pre-emption in NR.

Once DL URLLC data appears in a buffer, a base station should choose the earliest moment of time when resources can be normally allocated without colliding with the resources allocated for an already ongoing downlink transmission for the corresponding UE. This may be either in the beginning of the slot or a mini-slot where the mini-slot can start at any OFDM symbol.

Hence, downlink pre-emption may happen when one or more long-term allocations (e.g., based on a slot) occupy resources (particularly, wideband resources) and there is no room for URLLC data transmission, typically supported using a mini-slot. In this case a scheduler can send DCI to the UE for which the URLLC data is intended and thereby inform the UE that an override (pre-emption) has been triggered for the ongoing transmission in downlink. When an enhanced Mobile Broadband (eMBB) DL transmission is pre-empted, the pre-empted part of the original message pollutes the soft buffer (only noise and/or interference is received or are represented by the buffer). It is therefore important (though not required by the standard) to flush the affected bits from the soft buffer to increase the decodability of the eMBB data at the UE. If not, the pre-empted bits may negatively impact decoding in retransmissions, which will likely happen. According to Release 15, a DCI-based indication of the DL pre-emption may be explicitly signaled, which is carried either:
- (Option 1) by special DCI format 2_1 over group common PDCCH (3GPP document TS 38.213, version 16.4.0, clause 7.3.1.3.2 and clarified, section 11.2 "Discontinuous transmission indication") or;
- (Option 2) by special flag in multi-CBG retransmission DCI "CBG flushing out information" (3GPP document TS 38.213, version 16.4.0, section 7.3.1.2 - DCI formats for scheduling of PDSCH).

Option 1 gives an indication as a 14-bit bitmap, which addresses reference downlink resource domains in between two pre-emption indication (PI) messages. The reference resource is configured by RRC, wherein the highest resolution of this signaling in time is 1 OFDM symbol and in frequency is half of the BWP (BandWidth Part), but not at the same time. The longer the periodicity of messages, the coarser the resolution. The group common DCI format 2_1 indicates which part of the configured reference resource is preempted. Since this is a group common signaling, all UEs within the BWP may read it.

Option 2 is a user specific way of signaling. The HARQ retransmission DCI, which contains a set of code block (CB) and/or code block groups (CBGs), may have a special bit to indicate that the UE must overwrite existing bits in the soft buffer (e.g., to not combine) by soft bits of retransmitted CB and/or CBGs. In this case gNB is responsible for determination of subset of CB and/or CBGs which needs to be flushed before the soft-combining process. The Option 2 is not further discussed for the subject technique.

Any of the embodiments may implement UL Cancellation in NR.

In Release 16, two methods are adopted to enable inter-UE UL cancellation (which is also referred to as pre-emption) in NR.

The first method is based on power control to increase the power of the URLLC to make it more resilient to interference from the one or more eMBB users. Additional power control for release 16 UEs are specified in 3GPP document TS 38.213, version 16.4.0, clause 7.1.1. The main advantage with this option is that it does not require any changes in the behavior of the eMBB UE, hence it works with Release 15 UEs. One disadvantage is that to guarantee the performance of the URLLC UE while being interfered by eMBB traffic, the transmit power spectral density (PSD) may have to be increased significantly which can cause interference to other cells. Also, UEs not in the close vicinity of the base station may not have the power budget to do this increase and will therefore experience much lower Signal to Interference and Noise Ratio (SINR) than the required.

The second method is based on a cancellation indicator being transmitted from the base station to the interfering eMBB UEs. When a URLLC UE is scheduled on time and/or frequency resources that are already scheduled to a lower priority eMBB UE, the base station can transmit a cancellation indicator to the eMBB UE. Upon reception of this indicator the eMBB UE will avoid transmitting on a set of indicated resources. The details of the cancellation indicator and the UE behavior upon reception of this signal is specified in 3GPP document TS 38.213, version 16.4.0.

The mechanism for UL cancellation indication (CI) includes a reference time-frequency region that is configured for the UE by radio resource configuration or control (RRC) signaling, and a downlink control information (DCI) that indicates parts of the configured resources within which the transmission should be cancelled. The reference time-frequency region is also referred to as reference resource (RR). The size of the cancellation indication DCI as well as the time domain granularity are configurable. The frequency domain granularity can then be determined from the total bit field size and the time domain granularity.

A typical use case for this is when eMBB traffic is scheduled in a whole slot and all PRBs and time sensitive URLLC needs to be transmitted. Here, time sensitive means that it requires instant access to the channel and waiting until the next slot before transmission will introduce too much delay. In NR, URLLC traffic may be scheduled on one or a few OFDM symbols and with a significantly shorter time from the uplink grant to when the uplink transmission takes place. This means that eMBB users may already have been scheduled on all available time and/or frequency resources. With the cancellation indicator, the gNB can choose to cancel the eMBB traffic and hence reduce the interference to the URLLC UE.

Any of the embodiments may implement DCI formats. DCI formats a described in 3GPP document TS 38.213, version 16.4.0

Any of the embodiments may implement or use the following assumption:
- The term COT is used often for FFP for simplicity. For example, if we say COT has idle period, it means FFP has idle period because FFP consists of COT and idle period, see Fig. 5
- gNB COT means gNB initiated COT
- UE COT means UE initiated COT

The technique may be implemented according to at least one of the following enumerated embodiments 1 to 15 and/or according to at least one of the embodiments defined by the list of claims.

### Section A: Transmission restrictions in Idle periods of multiple active COTs

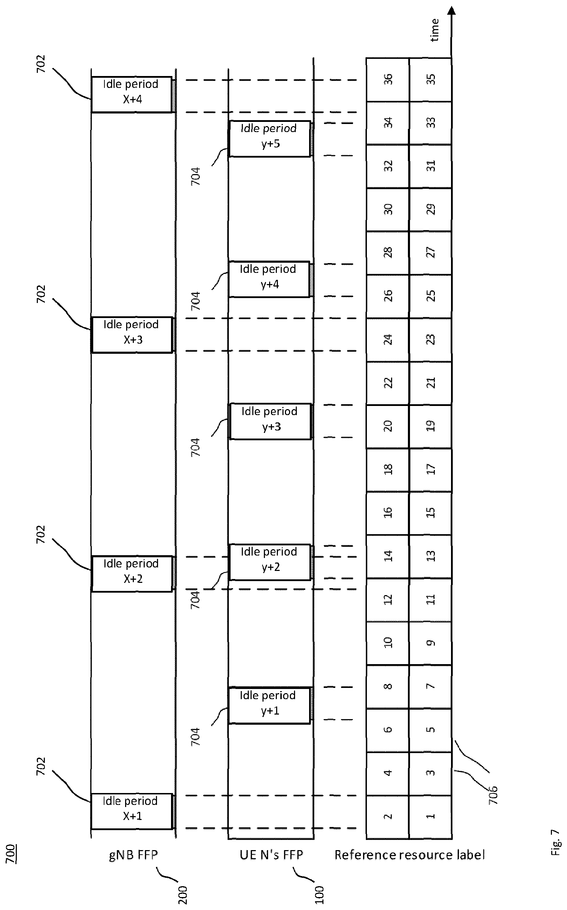

1. In one embodiment, if there is a scenario where UE has initiated its own COT and gNB has its own COT, then there are two types of idle period which UE/gNB may seek to transmit or not (i.e., restrictions can be applied). One idle period belongs to gNB COT and another period is part of UE COT. So, we define following "restriction options", wherein different nodes can be restricted in different idle period types, which are
   a. UE cannot transmit in gNB COT's idle period where UE has initiated its own COT
   b. UE can transmit in gNB COT's idle period where UE has initiated its own COT
   c. gNB cannot transmit in UE COT's idle period where gNB has initiated its COT
   d. gNB can transmit in UE COT's idle period where gNB has initiated its COT
   e. Combination a and c
   f. Combination a and d
   g. Combination b and c
   h. Combination b and d
2. In embodiment 1, we have defined non-limiting options for the transmission restriction on idle periods of different COTs. These options can be indicated to the UE by following ways:
   a. Select option via RRC
   b. Select option via DCI
      i. Examples of DCI is scheduling DCI, unicast DCI, group-common DCI or some new DCI
      ii. gNB can define options in some RRC table and DCI can indicate the option (indicating the row in RRC table) which is to be enabled or disabled.
3. Elaborating on Embodiment 2, option b, the restrictions (options in Embodiment 1) can be indicated as following ways
   a. The restriction can be indicated in scheduling DCI for PUSCH
      i. In one example, the existing fields, e.g., Channel Access Type, the CP extension fields in formats e.g., DCI 0_0, 0_1 can be used to indicate the transmission restriction options
      ii. In one option, new fields can be introduced to indicate restriction options in, e.g., DCI format 0_0, 0_1, 0_2, etc.
   b. The restriction options can be indicated via group-common DCI
      i. In one example, the existing fields, e.g., COT duration indicator in DCI format 2_0 can be used to indicate the transmission restriction options
      ii. In one option, new fields can be introduced in format 2_0 to indicate restriction options
      iii. In one option, new fields can be introduced in cancellation DCI, e.g., format 2_4 to indicate restriction options
      iv. Traditionally, group-common DCI format 2_4 indicates reference resource over which any UL transmission is to be cancelled. In one option, this behavior can be emulated, where gNB can indicate reference resource (corresponding to idle periods of gNB COT or some UE COT) over which user group applies indicated restriction options. For example, gNB indicates some reference resource corresponding to idle periods with restriction option 1-a, it means the UEs in the cell cannot transmit in gNB's idle period if UEs' have their own initiated COTs.
   c. The restriction options can be indicated in DCI for certain COT configurations (it can be UE COT or gNB COT).
      a. For example, if gNB has two gNB COT configurations, say gNB COT ID#X1 and gNB COT ID#X2, then gNB can tell UE, implement option 1-a with gNB COT ID#X1, means UE will not transmit in gNB FFP ID's X1's idle periods but there is no such restriction for gNB FFP ID's X2.
4. In one embodiment 1, we laid some restriction options, but there can be additional parameters/information on time period or resource over which these restrictions are applied. For example, if gNB indicates option 1-a, then for what time or what or how many idle periods, etc., the restriction is valid. In scheduling DCI or Group-common DCI, gNB can indicate this in following ways
   a. Resources or Reference resources: Resources over which restrictions are applied. The resources correspond to idle period(s) of known COT configurations. This is bit similar to DCI format 2_4 working where it indicates reference resource indicating the UL cancellation over it. There can be many flavors to indicate the 'idle period' resource, one example is to indicate the resource or reference resource of the selected idle periods, e.g., if gNB indicates option 1-a, it can mention, e.g., resources correspond to idle periods in gNB COT period, n, n+1, n+7, n+8, e.g., as illustrated at reference signs 702, or analogously for UE COT periods at reference signs 704). For e.g., based on scenario depicted Fig. 7, if gNB indicates option 1-a, and gNB 200 wants UE 100 not to transmit in first and last gNB's FFP's idle period in the figure (there are 4 idle periods in gNB FFP depicted in the figure) then gNB indicates idle period resources, e.g., label 1 ,2, 33, 34, 35, 36 at reference signs 706.
      i. In another option, gNB can mention resources or reference resources, where if there is an idle period over these indicated (reference) resources, the notified restriction option is applied. Otherwise, if there are no idle period over these reference resources, then UE would ignore it, see Fig. 7. If in Fig. 7 scenario, gNB indicates option 1-a, and wants that UE not to transmit in first three gNB FFP's idle periods in the figure, then it can indicate staring resource label and end resource label, i.e., label 1 and label 24 (corresponding to first three gNB FFP's idle periods), and UE will not transmit in label 1,2,11,12,13,14,23,24 as they intersect with gNB FFP's idle period
   b. Time span: In this example, gNB can mention, resources or reference resources in the form of time information, e.g., from a time instant t1 to t2, then all the idle periods of a given COT configuration with the span, the restriction is applied. This is bit similar to 4-a-l option
   c. COT period number: In this example, gNB can mention, e.g., (a) COT/FFP period, n, n+1, n+7, n+8 or (b) COT/FFP period, n to m, for which the restriction is applied in the their associated idle periods, if gNB indicates option 1-a, then UE cannot transmit in gNB's COT's idle period for the mentioned COT periods.

**Fig. 7** shows a diagram 700 schematically illustrating temporal radio resources 702, 704, and/or 706, which can be associated or are associated with at least one of the first COT initiated by the radio device 100 (e.g., in the second row) and/or the second COT initiated by the network node 200 (e.g., in the first row). The respective temporal radio resource is labeled. The label to resource mapping may be provided in RRC configuration.

The network node 200 (e.g., a gNB) may indicate at least one label for various idle periods, over which it can impose the at least one restriction for the one or more radio devices (e.g., UEs).

### Section B: Remaining COT information using gNB's group-common transmission

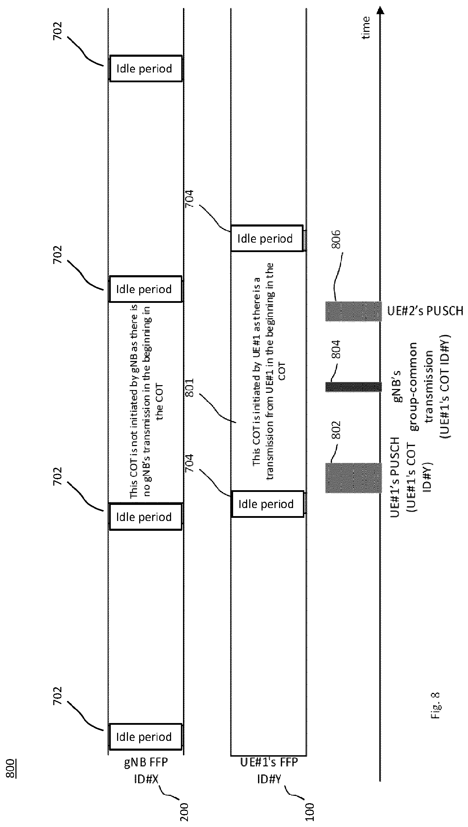

First, we describe a scenario, e.g., as schematically illustrated in Fig. 8, wherein a first radio device 100 (referred to by UE#1 without limitation) has initiated its own COT (i.e., the first COT 801, e.g. by a transmission 802). A second radio device (UE#2) is scheduled in gNB COT (i.e., the second COT). The network node 200 (referred to by gNB without limitation) has responded to UE#1 with some group-common transmission.

Now, there can be a confusion that UE#2 may transmit in gNB COT even if gNB 200 has not initiated its gNB COT. This is against the rule as the COT (e.g., the channel) is not grabbed (e.g., occupied) by gNB 200, but UE#2 may transmit there. Question is why UE#2 end up making wrong decision. This is because, this group common transmission can be read by UE#2, and if both gNB COT and UE COT are overlapping, then UE#2 thinks gNB is transmitting in gNB COT but in actual gNB is transmitting in UE's COT. At least some of the embodiments, e.g., the enumerated embodiments 5 to 10, may be implemented to eliminate this wrongful behavior.

**Fig. 8** schematically illustrates a time sequence 800 of (e.g. potential) temporal radio resources 704 and 702 (e.g., idle periods) associated with the first and second COT, respectively.

Let us consider an assumption, UE-to-UE sharing not allowed, i.e., UE#2 PUSCH cannot be shared with UE#1's FFP. If this assumption is followed, then UE#2 PUSCH can only be transmitted if gNB COT is initiated because this PUSCH cannot be transmitted as a part UE#1's COT. However, if the gNB COT is not initiated by gNB 200 and gNB 200 transmits group-common transmission as a part of UE#1 COT 801, then this group-common transmission can be detected by UE#2, which UE#2 may misinterpret that the transmission 804 is a part of gNB COT but actually it is a part of UE#1 COT 801, and with this wrong understanding, UE#2 transmits and thus breaks the rule.
5. In one embodiment, the group-common transmission can indicate that this group-common transmission belongs to which COT, e.g., it can mention COT ID#Y in group-common transmission. Now if UE#2 reads this transmission, it will know, that this group-common transmission is not a part of gNB COT (which has COT ID#X), rather it's part of some other COT, i.e., COT ID#Y
6. In one embodiment, gNB can include a flag, e.g., 1-bit flag, in the group-common transmission indicating
a. either the transmission is part of gNB COT, e.g., by setting, flag = 0, or
b. the transmission is a part of some UE COT, e.g., by setting, flag = 1.
Now, when UE#2 reads this group-common transmission and finds if flag value is 1, then it understands the transmission is transmitted as a part of some UE initiated COT instead of gNB initiated COT.
7. In Embodiment 6, the flag has two options, extending this, the flag can have more than two options. Each option indicates a COT ID. Some COT ID(s) are an indicative gNB COT ID(s) and other options represent the various COT IDs of UE initiated COTs for different UEs. Let us first expand the scenario from what we provided in Embodiment 5. In the expanded scenario, there is another UE#3, which is configured with three UE initiated COT configurations, gNB is also configured with two gNB COT configurations (note, at a time, any node (UE/gNB) can initiate only one COT), UE#1 is allowed to initiate only one COT, and UE#2 is provided with no COT configuration which it can initiate. Let us represent these configurations with COT IDs, gNB is configured for COT initiation for configuration COT ID#0, COT ID#1; UE#1 is configured for COT initiation for configuration COT ID#2; UE#3 is configured for COT initiation for configuration COT ID#3, COT ID#4, COT ID#5. Further, all UEs are configured to transmit in gNB's COT ID#0, but in COT ID#1, only UE#2 has the access, and also, we implement COT sharing between UEs, where UE#3 is configured to share COT with UE#2 over COT ID#4 (but UE#3 need not know about or vice-versa, as gNB can schedule transmission over COT ID#4). The example may be summarized according to the below Table 2.

**Table 2: COT access restriction for non-initiating UEs**

| **ode** | **Node's initiating COT configurations** | **Initiating node share its COT with other nodes (non-initiator)** |
|---|---|---|
| NB | COT ID#0, | UE#1, UE#2, UE#3 |
| | COT ID#1 | UE#2 |
| E#1 | COT ID#2 | gNB |
| E#2 | none | |
| E#3 | COT ID#3 | gNB |
| | COT ID#4 | gNB, UE#2 |
| | COT ID#5 | gNB |

Let us assume, there is group-common transmission in some COT, now if there is confusion whether UE#2 should transmit or not if it detects group-common transmission over the resource which has overlapping COT configurations. Before proceeding, let us first define the flag options, i.e.,
a. Flag = 000 indicates COT#0
b. Flag = 001 indicates COT#1
c. Flag = 010 indicates COT#2
d. Flag = 011 indicates COT#3
e. Flag = 100 indicates COT#4
f. Flag = 101 indicates COT#5
g. Flag = 110 not configured
h. Flag = 111 not configured

Now, we have defined 3-bit flag, and when gNB transmit its group-common transmission it can indicate the flag option indicating the COT ID where this group-common transmission is transmitted in. If the group-common transmission indicates flag option 000, 001, 100; then UE#2 can transmit after reading the group-common transmission within the same COT period where it has detected the transmission after performing appropriate LBT category (e.g., depending on the time-gap between group-common and UE#2's scheduled transmission in the same COT period). Note, if UE#2 has detected group-common transmission in a COT period 'n' for some COT ID, then UE is allowed to transmit in period n given the group-common transmission has valid flag (COT ID) indication, but it does not mean UE has the access in period n+1 (the UE has to go through same procedure again as it happened in period 'n').

Hence, to allow this type of access mechanism, gNB need to provide UEs with some a-priory information (e.g., as exemplified in Table 2), so that the UE 100 knows based on the COT ID indicated in the flag, whether the UE 100 has the access right or not, e.g.,
a. gNB can configure UE's RRC with the COT IDs, the UE has the access, e.g., as
   i. an initiator, or
   ii. non-initiator
   Some examples are (in reference to Table 2)
   i. In UE#'s RRC, it is stored with COT IDs, i.e., COT IDs, ID#0, ID#1, ID#4 as a part of non-initiator IDs
   ii. In UE#3's RRC, it is stored with information, the COT IDs, ID#3, ID#4, ID5 which UE#3 is allowed to initiate, and as a non-initiator in COT ID#0
      a) UE#3 **does not** need to know that the UE#2 has the access to its COT because it is gNB's headache how it schedule, and gNB's headache to inform UE#2 that it can transmit in COTID#4 if it's initiated by UE#3 via group-common transmission or even unicast transmission.
b. UEs can be configured which COT IDs it does not have access (as a initiator or as a non-initiator), but if option 'a' is provided, then this option 'b' can be optional because UE can deduce that all remaining IDs which are not option 'a', it cannot transmit as a initiator/non-initiator
c. The group-common transmission can be based, e.g., DCI format 2_0, 2_4.

8. In Embodiment 7, we presented a complex scenario where gNB configures UE#3 to share its COT with UE#2 over COT ID#4. In this embodiment, we provide more rules on UE-to-UE COT sharing
   a. In one option, taking an example where UE#2's scheduled allocation overlaps with UE COT ID#4 and gNB COT ID#0. Further assuming, UE COT ID#4 is active and UE#2's scheduled resource overlaps with COT ID#4's idle period; also, gNB COT ID#0 is active and the UE#2's same scheduled resource overlaps with COT ID#0's valid COT period. Given COT ID#4 is active (initiated by UE#3), so following possibilities can happen, if gNB transmits group-common transmission
      i. As a part of gNB COT over COT ID#0, UE#2 can transit after reading the transmission, the transmission can be group-common or unicast based (i.e., only meant for UE#2)
      ii. As a part of UE COT ID#4's transmission (gNB's group-common transmission indicates flag option 100), then UE#2 should not transmit even though UE#2 has the access to COT ID#4, because UE#2 scheduled resource overlaps with COT ID#4' idle period. To make sure UE#2 does not transmit in COT ID#4's idle period, following options can be applied
         a) UE#2 is provided with COT ID#4's details in RRC, e.g., COT's periodicity, idle period locations, then UE#2 will know by itself its scheduled resource overlaps with idle period of COT ID#4, so it should not transmit
         b) In group-common transmission, when gNB indicates flag corresponding COT ID#4 activation, it can additionally indicate, e.g., the remaining COT (COT ID#4) equivalent to zero, means after group-common transmission in COT ID#4, the remaining COT has invalid period or idle period, so that UEs cannot transmit even though they have access
         c) In group-common transmission, when indicates flag corresponding COT ID#4, it can additionally indicate, e.g., the remaining valid part of COT/FFP and/ or non-valid part of the COT/FFP (COT ID#4), means after group-common transmission in COT ID#4, certain UEs cannot transmit over the resource which is a part of non-valid region, e.g., idle period if they have scheduled allocation overlapping with it.
         d) gNB does not send group-common transmission (instead it can send in the form of some unicast transmission responding to other UE but not UE#2 in COT ID#4), thus UE#2 will unable to detect the transmission and thus UE#2 knows that it cannot transmit as a part of COT ID#4 as it has not detected the transmission
         e) The group-common transmission can indicate which UEs can transmit or not. For example, it can indicate UE#2 is not allowed to transmit (because it has overlapping allocation with idle period) but some other UE, say UE#4 is allowed to transmit in COT ID#4 as it's resource is not overlapping with idle period of COT ID#4. Hence, gNB can mention UE ID#4 in the group-common transmission, thus UE ID#4 will transmit but not UE ID#2.
            1) For this option, gNB can skip configuring UEs in RRC, e.g., the UE has access to which COT IDs (as a non-initiator), because if gNB does group-common transmission it can indicate which UEs are allowed to transmit after reading this group-common transmission. So, if group-common transmission says UE#2 can transmit, it will transmit otherwise not; UE#2 need not to know which COT is active, COT ID#4 or COT ID#0 because if gNB thinks that if UE#2 transmits and might break the rule, e.g., by transmitting in idle period, then in group-common transmission, gNB never indicates UE#2, and thus UE#2 won't transmit. In summary, group-common transmission tells UE whether it can transmit or not without the need to (a) configure UE with all the possible COT IDs in RRC for the access (as a non-initiator) and (b) the flag options indications.
9. Extending Embodiment 8-a-ii-e), in this embodiment, we skip methodologies described in embodiment 7, e.g., we don't do any implementation of flag, or configure with RRC with various restriction on COT IDs access for non-initiator UEs. We assume all the UEs belonging to a gNB have the default right in any node's (gNB and its UEs) COT as a non-initiator transmitter, i.e., e.g., in Table 2, there will be no restriction defined as per third column, i.e., all UEs are allowed to act as non-initiator in all gNB's COT IDs; whereas in UE initiated COT IDs, then all the remaining UEs can act as a non-initiator transmitter. The reason for clipping the restriction away, a non-initiator cannot transmit in some active UE-initiated COT because the transmissions are gNB-controlled, therefore, a non-initiating UE will not transmit,
   - if there is no scheduled resource in the COT, or
   - if gNB does not indicate to non-initiating UE by some means that it allowed to transmit on its resource in the some UE's initiated COT. This is because the non-initiator UE cannot read initiating UE's transmission (therefore, non-initiating UE cannot know if COT is grabbed or not), and thus non-initiating UE must rely on gNB's transmission as a form of indication which signifies that the initiating UE has grabbed the COT and the non-initiating UE can transmit on the resource (if it's valid, e.g., does not overlap with idle period).

Hence, it makes sense, when gNB transmits in UE-initiated COT, it can tell the non-initiating UE in the COT whether it can transmit or not and skipping the non-initiating COT IDs configurations and flag options. The non-initiating UE need not to worry, whether the COT is grabbed or not, or if it's resource is overlapping with idle period or not; because in case if the UE COT is not grabbed by the initiating UE or if UE COT is grabbed but non-initiating UE's resource is overlapping with COT's idle period, then gNB make sure that non-initiating UE will not transmit, e.g., not responding or not indicating to the UE. See below examples.

| **Non-initiating UE's scheduled resource** | **The scheduled resource overlapping with some UE's active initiated COT period** | **Non-initiating UE's transmission behavior in in some UE-initiated COT subject to gNB's transmission** | **Comment** |
|---|---|---|---|
| UE#2's scheduled resource in active COT ID#4 | Resource is in valid part on active COT ID#4 | gNB sends unicast transmission (the unicast transmission is only read by UE#2) | This implies UE#2 can transmit even without knowing COT ID#4 identity or its valid portion |
| | | gNB sends group-common transmission (which UE#2 can read) | |
| | Resource is in non-valid part of active FFP ID#4, i.e., on idle period | gNB does not send unicast transmission to UE#2 gNB does not transmit group-common transmission | This implies UE#2 will not detected gNB's transmission, therefore it cannot transmit (without knowing COT ID#4 identity or its idle period region) |

| **Non-initiating UE's scheduled resource** | **The scheduled resource overlapping with some UE's active initiated COT period** | **Non-initiating UE's transmission behavior in in some UE-initiated COT subject to gNB's transmission** | **Comment** |
|---|---|---|---|
| UE#2's and UE#4's scheduled resource in active COT ID#4 | Both UE's resource is in valid part on active COT ID#4 | gNB sends two unicast transmissions to the UEs (the unicast transmission to UE#2 and another to UE#4) | This implies both UEs can transmit even without knowing COT ID#4 identity or its valid portion |
| | | gNB sends group-common transmission (which is read by both UEs) | |
| | Both UE's resource is in non-valid part on active FFP ID#4, e.g., on idle periods | gNB does not send unicast transmission to any UE | This implies both UEs have not detected gNB's transmission, therefore they cannot transmit (without knowing COT ID#4 identity or its idle period region) |
| | | gNB does not send group-common transmission | |
| | UE#2's resource overlaps with idle period and UE#4's resource overlaps with valid part on active COT ID#4 | gNB sends unicast transmission to UE#4 | This implies UE#4 can transmit but UE#2 cannot |
| | UE#4's resource overlaps with idle period and UE#2's resource overlaps with valid part on active COT ID#4 | gNB sends unicast transmission to UE#2 | This implies UE#2 can transmit but UE#4 cannot |

In any embodiment, e.g. in each of enumerated Embodiments 5 to 9, at least one of the following rules may be applied (i.e., never be broken):
- If a given COT is not initiated, no node can transmit in that COT even though it has access/or allowed
- If a given COT is initiated, the UE is allowed to transmit provided it has scheduled allocation provided by the gNB, and the UE has LBT success (various categories depending on time-gaps between the transmissions)
- If a given COT is initiated, the nodes which transmit as a part of the COT cannot transmit over COT's idle period
- A node can have more than one COT configurations (for initiation), but at a time, node can initiate only one COT.
- We used non-initiator term: It means for a given COT, the UE has no right to initiate the COT, but if this COT is initiated by some other UE which has the right to do it, then this non-initiated UE can transmit in this initiated COT as per gNB's subjected conditions and LBT/NR-U rules.

Any of the embodiments may assume that in UE-to UE COT sharing, non-initiating UE cannot read initiating UE's transmission (based on current implementation), so in order to make sure that non-initiating UE transmits in this UE COT, gNB should transmit in this COT (in the form of group-common or unicast based with valid options as discussed above) so that non-initiating UE can read the gNB's transmission and understand that this COT is initiated and it's okay for non-initiating UE to transmit as part of this COT.

10. In a UE-to-UE COT sharing, we described in Embodiment 8,9 that non-initiating UE in the shared COT transmit by first sensing/decoding gNB's transmission as non-initiating UE cannot read UE-initiating transmission in the COT (above assumption). However, in advance mechanisms, the non-initiating UE can read the UE initiating COT transmission, thus the non-initiating UE does not need any indication from gNB whether it can transmit or not. In order to read initiating UE's transmission, following options can be applied
a. Non-initiating UE able to read initiating transmission which can be based on side link control channel or side link shared channel (via D2D)
b. Non-initiating UE able to read initiating transmission's e.g., DMRS, or UCI (multiplexed with initiating transmission, where UCI can be some sequence), or UE ID, etc.

Therefore, non-initiating UE must be configured so that it knows the DMRS/UCI sequence/UE ID of initiating UE, so that if non-initiating UE detects the initiating UE's transmission, it can safely assume that COT is grabbed and the non-initiating UE can transmit subject to LBT category without the need of indication from gNB

### Section C: COT selection between UE COT and gNB COT

The technique may be applied in a scenario, wherein on a given resource, the UE 100 can transmit as either as a responding device in a gNB-initiated COT (gNB COT, i.e., the second COT) or as UE-initiated COT (UE COT, i.e. a first COT). Furthermore, if the UE 100 transmits, then the gNB 200 needs to know which COT UE has been selected or is to be selected.

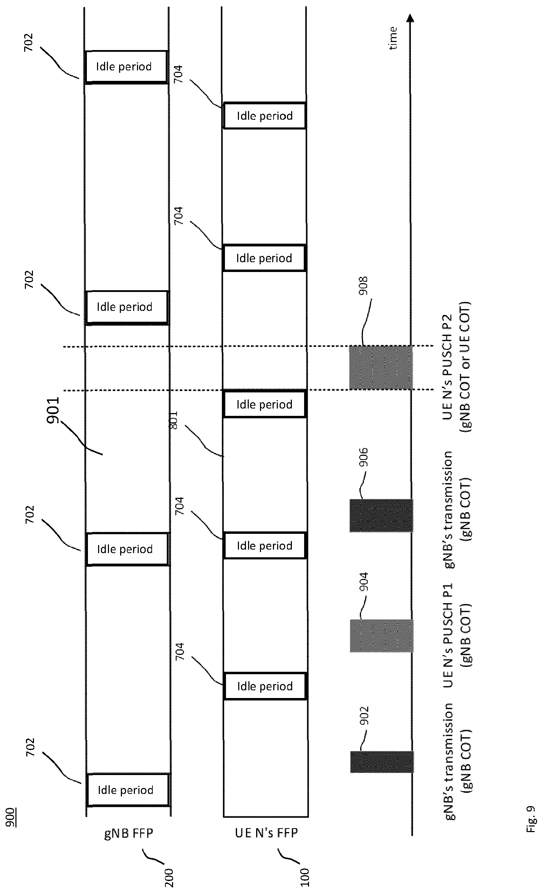

**Fig. 9** schematically illustrates a temporal sequence 900 comprising FFPs of the gNB 200 and FFPs of the UE 100.

The given DL transmission (e.g., as indicated at reference sign 902 or 906) and scheduled PUSCH (e.g., as indicated at reference sign 904 or 908, respectively) have overlapping COT configurations (e.g., FFP of the gNB 200 and FFP of the UE 100 may overlap). For case with allocated PUSCH P2 908, if gNB COT 901 is initiated(e.g., as indicated at reference sign 906), then UE 100 has the possibility to transmit PUSCH P2 908 on gNB COT. But, at the same PUSCH 908 can be transmitted via UE-initiated COT transmission as the PUSCH P2 908 is scheduled in the beginning of the UE FFP (i.e., after UE's idle period 704). Conventionally, this may cause confusion to gNB 200 that whether the transmitted PUSCH P2 908 is part of gNB COT or UE COT. On the other hand, for PUSCH P1 904, there is no such confusion as PUSCH P1 904 cannot be transmitted via UE-initiated COT because its allocation is not in the beginning of UE FFP period.
11. In order to not to have confusion over COT selection, gNB can indicate the priority to which accordingly the COT should be selected in scheduling or CG activation DCI or via RRC configuration (e.g., RRC PUSCH config parameter). The information (COT selection) may be indicated in at least one of the following ways:
a. In one option, if gNB configures 2-bit priority information and indicate one of the following options in DCI/RRC (out of following 4 options)
   i. If gNB COT initiated, then UE COT is prioritized w.r.t. gNB COT
   ii. If gNB COT initiated, then UE COT is not prioritized w.r.t. gNB COT
   iii. If gNB COT is not initiated, then UE COT is allowed
   iv. If gNB COT is not initiated, then UE COT is not allowed (this can mean if gNB COT is not initiated, then UE should not transmit)
b. In one option, if gNB configures 1-bit priority information and indicates one of the following options in DCI/RRC (out of following 2 options)
   i. If gNB COT initiated, then UE COT is prioritized w.r.t. gNB COT
   ii. If gNB COT initiated, then UE COT is not prioritized w.r.t. gNB COT
   If gNB COT is not initiated, gNB can configure in RRC that UE is allowed to transmit in UE COT
c. In one option, if gNB configures 1-bit priority information and indicates one of the following options in DCI/RRC (out of following 2 options)
   i. If gNB COT initiated, then UE COT is prioritized w.r.t. gNB COT
   ii. If gNB COT initiated, then UE COT is not prioritized w.r.t. gNB COT
   If gNB COT is not initiated, gNB can configure in RRC that UE is not allowed to transmit in UE COT
d. In one option, if gNB configures 1-bit information and indicate one of the following options in DCI/RRC (out of following 2 options)
   i. UE COT is allowed (irrespective of gNB COT)
   ii. UE COT is not allowed (irrespective of gNB COT)

Hence, given the information related to COT selection between UE COT and gNB COT in DCI/RRC, UE selects the COT accordingly. This priority information can be updated by sending the DCI again or reconfiguring the RRC. In DCI, the priority options can be configured over Channel Access Type, the CP extension fields or by introducing new fields in DCI format 0_0, 0_1, 0_2.
12. In another embodiment, if both COTs are applicable (UE COT and gNB COT), then UE can mention COT selection information in the UCI, that the UL transmission belongs to which COT, where the UCI can be multiplexed with the UL transmission. The UL transmission can be dynamic PUSCH or CG PUSCH. For CG PUSCH, we can use CG-UCI included with COT selection information.
13. In another embodiment, if a UE allocated with multiple repetitions, and on some repetitions, both gNB COT and UE COT are applicable, then following options can be applied
   a. All the repetitions should follow the COT of first repetition
      i. For example, if first repetition is transmitted in gNB COT, then the following repetitions must be done in gNB COT. If for some following repetition, the gNB COT fails (e.g., gNB COT is not initiated), then UE cannot transmit those following/remaining repetitions in UE COT (even if it is possible) because first repetition is transmitted in gNB COT
      ii. For example, if first repetition is transmitted in UE COT, then the following repetitions must be done in UE COT. If for some of the following repetition, the UE COT fails (e.g., fails to initiate), then UE cannot transmit with those following repetitions in gNB COT (even if it is possible) because first repetition is transmitted in UE COT
   b. UE can transmit repetitions over both gNB COT and UE COT, e.g., if the first repetition is over gNB COT and successive repetitions can be over UE COT.
      i. When UE transmits repetition over the COT where both COTs are applicable, UE can decide autonomously or select the COT for repetition based on priority rules defined in Embodiment 11

### Section D: COT cancellation of UE initiated COT

UE may have active UE-initiated COT. However, there could be scenario gNB wants to cancel UE-initiated COT. Thus, we present following embodiments to enable this behavior
14. In this embodiment, we propose to utilize scheduling or CG activation DCI to cancel the UE-initiated COT. For example, we can utilize Embodiment 11's options where DCI is sent with new priority or COT selection information. For example, this is UE initiated COT cancellation using unicast operation.
15. In another embodiment, we use group-common DCI, e.g., format 2_0, 2_4 to cancel the UE initiated COT. This is similar to Embodiment 4-a to 4-c options, where in Embodiment 4, e.g., gNB cancels/apply restrictions in idle periods. Now, in this embodiment, the restriction become, "cancel UE initiated COT", and is applied to in similar fashion as in options a to c in Embodiment 4, i.e., gNB can send group-common DCI to cancel UE initiated COT over "reference resources", or "time-span", or "COT number". Further, there can two flavors for cancellation with COT number where gNB can tell UE or group of UEs that they should cancel their UE initiated COT on given
   a. gNB COT numbers; all UEs should know the gNB COT configuration; and the UEs which are engaging in UE-initiated COT, they will cancel their UE-initiated COT on indicated gNB COT numbers, or
   b. COT numbers on specific COT ID; in Embodiment 7, we described the concept of COT ID which can be gNB COT ID or UE COT ID; hence, utilizing the same concept, here in the embodiment, all the UEs, which are engaging in UE-initiated COT will cancel their UE-initiated COT on the occasions of mentioned COT ID that are indicated by group-common DCI; it is important that all the UEs have pre-possessed information of COT IDs, which gNB can provide to the UEs during RRC configurations.
   In group-common DCI transmission, all UEs will receive or can read the transmission, and if some UEs from the group don't have UE-initiated COT rights or configurations, they will ignore the command.

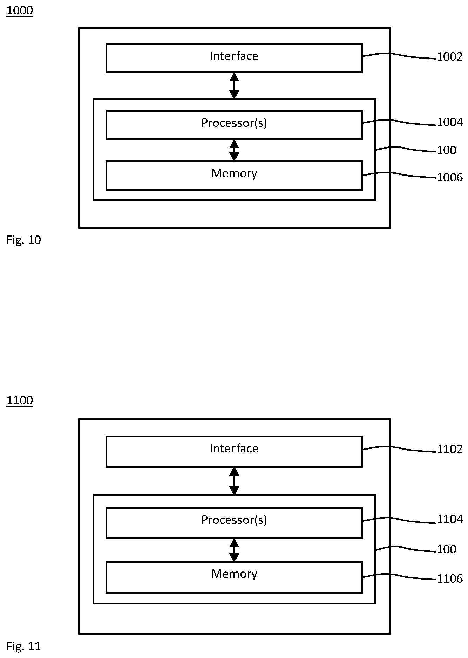

Fig. 10 shows a schematic block diagram for an embodiment of the device 100. The device 100 comprises processing circuitry, e.g., one or more processors 1004 for performing the method 300 and memory 1006 coupled to the processors 1004. For example, the memory 1006 may be encoded with instructions that implement at least one of the modules 102, 104 and 106.

The one or more processors 1004 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 100, such as the memory 1006, UE functionality. For example, the one or more processors 1004 may execute instructions stored in the memory 1006. Such functionality may include providing various features and steps discussed herein, including any of the benefits disclosed herein. The expression "the device being operative to perform an action" may denote the device 100 being configured to perform the action.

As schematically illustrated in Fig. 10, the device 100 may be embodied by a radio device 1000, e.g., functioning as a UE. The UE 1000 comprises a radio interface 1002 coupled to the device 100 for radio communication with one or more base stations, e.g., functioning as a network node of the RAN.

Fig. 11 shows a schematic block diagram for an embodiment of the device 200. The device 200 comprises processing circuitry, e.g., one or more processors 1104 for performing the method 400 and memory 1106 coupled to the processors 1104. For example, the memory 1106 may be encoded with instructions that implement at least one of the modules 202, 204 and 206.

The one or more processors 1104 may be a combination of one or more of a microprocessor, controller, microcontroller, central processing unit, digital signal processor, application specific integrated circuit, field programmable gate array, or any other suitable computing device, resource, or combination of hardware, microcode and/or encoded logic operable to provide, either alone or in conjunction with other components of the device 200, such as the memory 1106, base station functionality. For example, the one or more processors 1104 may execute instructions stored in the memory 1106. Such functionality may include providing various features and steps discussed herein, including any of the benefits disclosed herein. The expression "the device being operative to perform an action" may denote the device 200 being configured to perform the action.

As schematically illustrated in Fig. 11, the device 200 may be embodied by a network node 1100, e.g., functioning as a base station (e.g., gNB). The network node 1100 comprises a radio interface 1102 coupled to the device 200 for radio communication with one or more radio devices, e.g., functioning as the UE.

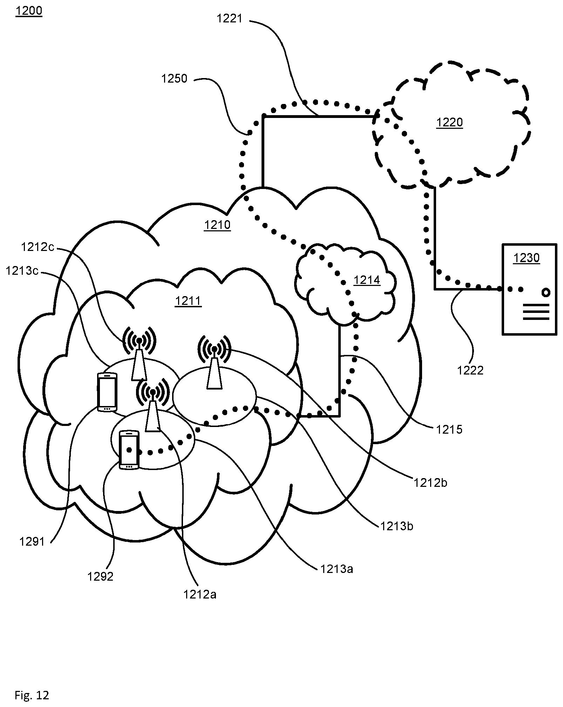

With reference to Fig. 12, in accordance with an embodiment, a communication system 1200 includes a telecommunication network 1210, such as a 3GPP-type cellular network, which comprises an access network 1211, such as a radio access network, and a core network 1214. The access network 1211 comprises a plurality of base stations 1212a, 1212b, 1212c, such as NBs, eNBs, gNBs or other types of wireless access points, each defining a corresponding coverage area 1213a, 1213b, 1213c. Each base station 1212a, 1212b, 1212c is connectable to the core network 1214 over a wired or wireless connection 1215. A first user equipment (UE) 1291 located in coverage area 1213c is configured to wirelessly connect to, or be paged by, the corresponding base station 1212c. A second UE 1292 in coverage area 1213a is wirelessly connectable to the corresponding base station 1212a. While a plurality of UEs 1291, 1292 are illustrated in this example, the disclosed embodiments are equally applicable to a situation where a sole UE is in the coverage area or where a sole UE is connecting to the corresponding base station 1212.

Any of the base stations 1212 and the UEs 1291, 1292 may embody the device 200 and the device 100, respectively.

The telecommunication network 1210 is itself connected to a host computer 1230, which may be embodied in the hardware and/or software of a standalone server, a cloud-implemented server, a distributed server or as processing resources in a server farm. The host computer 1230 may be under the ownership or control of a service provider, or may be operated by the service provider or on behalf of the service provider. The connections 1221, 1222 between the telecommunication network 1210 and the host computer 1230 may extend directly from the core network 1214 to the host computer 1230 or may go via an optional intermediate network 1220. The intermediate network 1220 may be one of, or a combination of more than one of, a public, private or hosted network; the intermediate network 1220, if any, may be a backbone network or the Internet; in particular, the intermediate network 1220 may comprise two or more sub-networks (not shown).

The communication system 1200 of Fig. 12 as a whole enables connectivity between one of the connected UEs 1291, 1292 and the host computer 1230. The connectivity may be described as an over-the-top (OTT) connection 1250. The host computer 1230 and the connected UEs 1291, 1292 are configured to communicate data and/or signaling via the OTT connection 1250, using the access network 1211, the core network 1214, any intermediate network 1220 and possible further infrastructure (not shown) as intermediaries. The OTT connection 1250 may be transparent in the sense that the participating communication devices through which the OTT connection 1250 passes are unaware of routing of uplink and downlink communications. For example, a base station 1212 need not be informed about the past routing of an incoming downlink communication with data originating from a host computer 1230 to be forwarded (e.g., handed over) to a connected UE 1291. Similarly, the base station 1212 need not be aware of the future routing of an outgoing uplink communication originating from the UE 1291 towards the host computer 1230.

By virtue of the method 300 and 400 being performed by any one of the UEs 1291 or 1292 and/or any one of the base stations 1212, the performance or range of the OTT connection 1250 can be improved, e.g., in terms of increased throughput and/or reduced latency. More specifically, the host computer 1230 may indicate to the network node 200 and/or the radio device 100 (e.g., on an application layer) the QoS of the traffic or any other trigger for URLLC, i.e., a trigger for using the technique.

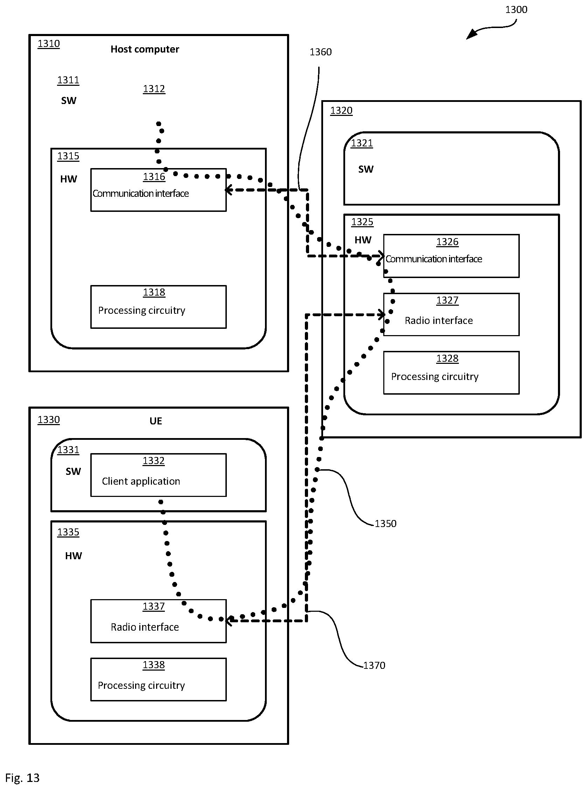

Example implementations, in accordance with an embodiment of the UE, base station and host computer discussed in the preceding paragraphs, will now be described with reference to Fig. 13. In a communication system 1300, a host computer 1310 comprises hardware 1315 including a communication interface 1316 configured to set up and maintain a wired or wireless connection with an interface of a different communication device of the communication system 1300. The host computer 1310 further comprises processing circuitry 1318, which may have storage and/or processing capabilities. In particular, the processing circuitry 1318 may comprise one or more programmable processors, application-specific integrated circuits, field programmable gate arrays or combinations of these (not shown) adapted to execute instructions. The host computer 1310 further comprises software 1311, which is stored in or accessible by the host computer 1310 and executable by the processing circuitry 1318. The software 1311 includes a host application 1312. The host application 1312 may be operable to provide a service to a remote user, such as a UE 1330 connecting via an OTT connection 1350 terminating at the UE 1330 and the host computer 1310. In providing the service to the remote user, the host application 1312 may provide user data, which is transmitted using the OTT connection 1350. The user data may depend on the location of the UE 1330. The user data may comprise auxiliary information or precision advertisements (also: ads) delivered to the UE 1330. The location may be reported by the UE 1330 to the host computer, e.g., using the OTT connection 1350, and/or by the base station 1320, e.g., using a connection 1360.

The communication system 1300 further includes a base station 1320 provided in a telecommunication system and comprising hardware 1325 enabling it to communicate with the host computer 1310 and with the UE 1330. The hardware 1325 may include a communication interface 1326 for setting up and maintaining a wired or wireless connection with an interface of a different communication device of the communication system 1300, as well as a radio interface 1327 for setting up and maintaining at least a wireless connection 1370 with a UE 1330 located in a coverage area (not shown in Fig. 13) served by the base station 1320. The communication interface 1326 may be configured to facilitate a connection 1360 to the host computer 1310. The connection 1360 may be direct, or it may pass through a core network (not shown in Fig. 13) of the telecommunication system and/or through one or more intermediate networks outside the telecommunication system. In the embodiment shown, the hardware 1325 of the base station 1320 further includes processing circuitry 1328, which may comprise one or more programmable processors, application-specific integrated circuits, field programmable gate arrays or combinations of these (not shown) adapted to execute instructions. The base station 1320 further has software 1321 stored internally or accessible via an external connection.

The communication system 1300 further includes the UE 1330 already referred to. Its hardware 1335 may include a radio interface 1337 configured to set up and maintain a wireless connection 1370 with a base station serving a coverage area in which the UE 1330 is currently located. The hardware 1335 of the UE 1330 further includes processing circuitry 1338, which may comprise one or more programmable processors, application-specific integrated circuits, field programmable gate arrays or combinations of these (not shown) adapted to execute instructions. The UE 1330 further comprises software 1331, which is stored in or accessible by the UE 1330 and executable by the processing circuitry 1338. The software 1331 includes a client application 1332. The client application 1332 may be operable to provide a service to a human or non-human user via the UE 1330, with the support of the host computer 1310. In the host computer 1310, an executing host application 1312 may communicate with the executing client application 1332 via the OTT connection 1350 terminating at the UE 1330 and the host computer 1310. In providing the service to the user, the client application 1332 may receive request data from the host application 1312 and provide user data in response to the request data. The OTT connection 1350 may transfer both the request data and the user data. The client application 1332 may interact with the user to generate the user data that it provides.

It is noted that the host computer 1310, base station 1320 and UE 1330 illustrated in Fig. 13 may be identical to the host computer 1230, one of the base stations 1212a, 1212b, 1212c and one of the UEs 1291, 1292 of Fig. 12, respectively. This is to say, the inner workings of these entities may be as shown in Fig. 13, and, independently, the surrounding network topology may be that of Fig. 12.

In Fig. 13, the OTT connection 1350 has been drawn abstractly to illustrate the communication between the host computer 1310 and the UE 1330 via the base station 1320, without explicit reference to any intermediary devices and the precise routing of messages via these devices. Network infrastructure may determine the routing, which it may be configured to hide from the UE 1330 or from the service provider operating the host computer 1310, or both. While the OTT connection 1350 is active, the network infrastructure may further take decisions by which it dynamically changes the routing (e.g., on the basis of load balancing consideration or reconfiguration of the network).

The wireless connection 1370 between the UE 1330 and the base station 1320 is in accordance with the teachings of the embodiments described throughout this disclosure. One or more of the various embodiments improve the performance of OTT services provided to the UE 1330 using the OTT connection 1350, in which the wireless connection 1370 forms the last segment. More precisely, the teachings of these embodiments may reduce the latency and improve the data rate and thereby provide benefits such as better responsiveness and improved QoS.

A measurement procedure may be provided for the purpose of monitoring data rate, latency, QoS and other factors on which the one or more embodiments improve. There may further be an optional network functionality for reconfiguring the OTT connection 1350 between the host computer 1310 and UE 1330, in response to variations in the measurement results. The measurement procedure and/or the network functionality for reconfiguring the OTT connection 1350 may be implemented in the software 1311 of the host computer 1310 or in the software 1331 of the UE 1330, or both. In embodiments, sensors (not shown) may be deployed in or in association with communication devices through which the OTT connection 1350 passes; the sensors may participate in the measurement procedure by supplying values of the monitored quantities exemplified above, or supplying values of other physical quantities from which software 1311, 1331 may compute or estimate the monitored quantities. The reconfiguring of the OTT connection 1350 may include message format, retransmission settings, preferred routing etc.; the reconfiguring need not affect the base station 1320, and it may be unknown or imperceptible to the base station 1320. Such procedures and functionalities may be known and practiced in the art. In certain embodiments, measurements may involve proprietary UE signaling facilitating the host computer's 1310 measurements of throughput, propagation times, latency and the like. The measurements may be implemented in that the software 1311, 1331 causes messages to be transmitted, in particular empty or "dummy" messages, using the OTT connection 1350 while it monitors propagation times, errors etc.

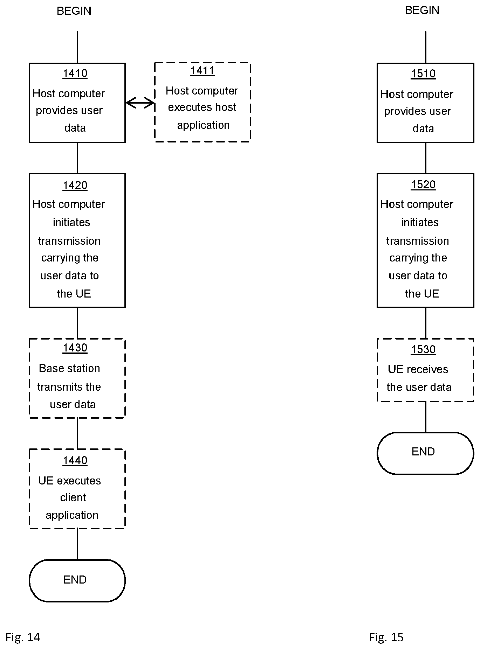

Fig. 14 is a flowchart illustrating a method implemented in a communication system, in accordance with one embodiment. The communication system includes a host computer, a base station and a UE which may be those described with reference to Figs. 12 and 13. For simplicity of the present disclosure, only drawing references to Fig. 14 will be included in this paragraph. In a first step 1410 of the method, the host computer provides user data. In an optional substep 1411 of the first step 1410, the host computer provides the user data by executing a host application. In a second step 1420, the host computer initiates a transmission carrying the user data to the UE. In an optional third step 1430, the base station transmits to the UE the user data which was carried in the transmission that the host computer initiated, in accordance with the teachings of the embodiments described throughout this disclosure. In an optional fourth step 1440, the UE executes a client application associated with the host application executed by the host computer.

Fig. 15 is a flowchart illustrating a method implemented in a communication system, in accordance with one embodiment. The communication system includes a host computer, a base station and a UE which may be those described with reference to Figs. 12 and 13. For simplicity of the present disclosure, only drawing references to Fig. 15 will be included in this paragraph. In a first step 1510 of the method, the host computer provides user data. In an optional substep (not shown) the host computer provides the user data by executing a host application. In a second step 1520, the host computer initiates a transmission carrying the user data to the UE. The transmission may pass via the base station, in accordance with the teachings of the embodiments described throughout this disclosure. In an optional third step 1530, the UE receives the user data carried in the transmission.

As has become apparent from above description, at least some embodiments of the technique allow for the transmission in a COT based on some rules, which helps to eliminate nondeterministic behavior when multiple COTs are available to a node (e.g., UE and/or gNB).

The scope of protection of the invention is defined in the appended set of claims.

## Claims

1. A method (300) of radio communicating between a radio device (100; 1000; 1291; 1292; 1330) and a network node (200) of a radio access network, RAN, using a temporal radio resource associated with a channel occupancy time, COT, the method (300) performed by the radio device (100; 1000; 1291; 1292; 1330) comprising:
determining (302) that a first COT (801) is initiated by the radio device (100; 1000; 1291; 1292; 1330) wherein determining (302) that the first COT (801) is initiated by the radio device (100; 1000; 1291; 1292; 1330) comprises: performing a clear channel assessment, CCA; and
radio communicating (306) with the network node (200) in the temporal radio resource associated with the first COT (801) by transmitting in the first COT if the CCA is indicative of clearance; and
**characterised in that** the method further comprises
receiving in the first COT (801) a group-common transmission (804), from the network node (200), in response to a transmission (802) of the radio device (100; 1000; 1291; 1292; 1330) initiating the first COT (801), wherein the group-common transmission (804) comprises a flag that is indicative of the group-common transmission being part of a COT initiated by another radio device (100; 1000; 1291; 1292; 1330) or part of a COT initiated by the network node (200).

2. The method (300) of claim 1, wherein the method (300) implements semi-static channel occupancy and/or a frame-based equipment, FBE, mode, optionally wherein the network node (200) assigns Fixed Frame Periods, FFPs; senses a channel for the radio communicating (306) for 9 microseconds just before a boundary of the FFP; and if the channel is sensed to be free, the network node (200) starts with a downlink transmission in the radio communicating (306) wherein the temporal radio resource associated with the respective COT comprises an idle period of a fixed frame period, FFP, the FFP comprising the respective COT and the idle period.

3. The method (300) of any one of claims 1 to 2, wherein the radio device (100; 1000; 1291; 1292; 1330) transmits in the temporal radio resource associated with a second COT (901) when the first COT (801) is initiated by the radio device (100; 1000; 1291; 1292; 1330) and the second COT (901) is initiated by the network node.

4. The method (300) of claim 3, wherein the radio device (100; 1000; 1291; 1292; 1330) refrains from receiving in the temporal radio resource associated with the first COT (801) when the second COT (901) is initiated by the network node (200).

5. The method (300) of any one of claims 1 to 4, further comprising:
the radio device receiving a control message from the network node (200), the control message being indicative of at least one restriction on the radio device using the temporal radio resource associated with the first COT (801) and/or on using the temporal radio resource associated with the second COT (901).

6. The method (300) of claim 5, wherein the at least one restriction
a. excludes the radio device (100; 1000; 1291; 1292; 1330) from the radio devices transmitting in the temporal radio resource associated with the second COT (901), when the radio device (100; 1000; 1291; 1292; 1330) has initiated the first COT (801); or
b. allows the radio device (100; 1000; 1291; 1292; 1330) to transmit in the temporal radio resource associated with the second COT, when the radio device (100; 1000; 1291; 1292; 1330) has initiated the first COT (801); or
c. excludes the network node (200) from transmitting in the temporal radio resource associated with the first COT (801), if the network node (200) has initiated the second COT (901); or
d. allows the network node (200) to transmit in the temporal radio resource associated with the first COT (801), if the network node (200) has initiated the second COT (901); or
e. comprises a combination of features a and c; or
f. comprises a combination of features a and d; or
g. comprises a combination of features b and c; or
h. comprises a combination of features b and d.

7. The method (300) of any one of claims 5to 6, wherein the at least one restriction is indicated in one of a downlink control information, DCI, comprising one of a 3GPP DCI format 0_0, 0_1, 0_2, 2_0, and 2_4, using one of:
a field for Channel Access Type;
cyclic prefix, CP, extension;
a restriction field of a scheduling DCI format 0_0, 0_1 or 0_2 for a physical uplink control channel, PUSCH;
a COT duration indicator in DCI format 2_0;
a restriction field in cancellation DCI based on DCI format 2_4.

8. The method (300) of any one of claims 5 to 7, wherein the control message is indicative of:
a reference resource over which an uplink transmission is to be cancelled, optionally wherein the reference resource corresponds to an excluded temporal radio resource associated with one of the first COT (801) and the second COT (901) or an excluded idle period associated with one of the first COT (801) and the second COT (901); and/or
a time period or a number of idle periods or a number of FFPs during which the at least one restriction is applicable; and/or
at least one label (702) for the temporal radio resource or idle period associated with the second COT (901); and/or
at least one label (704) for the temporal radio resource or idle period associated with the first COT (801); and/or
at least one label (706) for a reference resource or resource during which the at least one restriction is applicable; and/or
an identifier of the COT to which the at least one restriction is applicable.

9. The method (300) of any one of claims 1 to 8, wherein the control message and/or the group-common transmission (804) is, for each of a plurality of COTs, further indicative of an association of allowed radio devices (100; 1000; 1291; 1292; 1330) that are allowed to transmit in the temporal radio resource associated with the respective COT out of the plurality of COTs and/or further indicative of an association of excluded radio devices (100; 1000; 1291; 1292; 1330) that are excluded from transmitting in the temporal radio resource associated with the respective COT out of the plurality of COTs.

10. The method (300) of any previous claim, wherein the flag is further indicative of the group-common transmission (804) being part of the first COT (801).

11. A method (400) of radio communicating between a radio device (100; 1000; 1291; 1292; 1330) and a network node (200) of a radio access network, RAN, using a temporal radio resource associated with a channel occupancy time, COT, the method (400) performed by the network node (200) comprising :
determining (402) that a first COT (801) is initiated by the radio device (100; 1000; 1291; 1292; 1330) comprising receiving an uplink transmission from the radio device (100; 1000; 1291; 1292; 1330) in the first COT (801);
**characterised in that** the method further comprises
radio communicating (406) with the radio device (100; 1000; 1291; 1292; 1330) in the temporal radio resource associated with the first COT (801) by
transmitting a group-common transmission, in response to the received uplink transmission of the radio device (100; 1000; 1291; 1292; 1330) initiating the first COT (801), wherein the group-common transmission (804) comprises a flag that is indicative of the group-common transmission being a part of a COT initiated by another radio device (100; 1000; 1291; 1292; 1330); or part of a COT initiated by the network node (200).

12. The method (400) of claim 11, further comprising the steps of any one of claims 2 to 10.

13. A radio device (100; 1000; 1291; 1292; 1330) for radio communicating between a radio device (100; 1000; 1291; 1292; 1330) and a network node (200) of a radio access network, RAN, using a temporal radio resource associated with a channel occupancy time, COT, the radio device (100; 1000; 1291; 1292; 1330) being configured to:
determine (302) if a first COT (801) is initiated by the radio device (100; 1000; 1291; 1292; 1330) wherein determining (302) that the first COT (801) is initiated by the radio device (100; 1000; 1291; 1292; 1330) comprises:
performing a clear channel assessment, CCA; and
radio communicate (306) with the network node (200) in the temporal radio resource associated with the first COT (801) by transmitting in the first COT if the CCA is indicative of clearance; and,
**characterised in that** the radio device is further configured to
receive a group-common transmission from the network node (200), in response to a transmission (802) of the radio device (100; 1000; 1291; 1292; 1330) initiating the first COT (801), wherein the group-common transmission (804) comprises a flag that is indicative of the group-common transmission being part of a COT initiated by another radio device (100; 1000; 1291; 1292; 1330), or part of a COT initiated by the network node (200).

14. The radio device (100; 1100; 1291; 1292; 1330) of claim 13, further configured to perform the steps of any one of claims 2 to 10.

15. A network node (200) for radio communicating between a radio device (100; 1000; 1291; 1292; 1330) and the network node (200) of a radio access network, RAN, using a temporal radio resource associated with a channel occupancy time, COT, the network node (200) being configured to perform the method of any one of claims 11 to 12.

## Patentansprüche

1. Verfahren (300) zur Funkkommunikation zwischen einer Funkvorrichtung (100; 1000; 1291; 1292; 1330) und einem Netzwerkknoten (200) eines Funkzugangsnetzwerks, RAN, unter Verwendung einer zeitlichen Funkressource, die mit einer Kanalbelegungszeit, COT, assoziiert ist, wobei das Verfahren (300) von der Funkvorrichtung (100; 1000; 1291; 1292; 1330) durchgeführt wird und Folgendes umfasst:
Bestimmen (302), dass eine erste COT (801) von der Funkvorrichtung (100; 1000; 1291; 1292; 1330) initiiert wird, wobei das Bestimmen (302), dass die erste COT (801) von der Funkvorrichtung (100; 1000; 1291; 1292; 1330) initiiert wird, Folgendes umfasst:
Durchführen eines Clear Channel Assessment, CCA; und
Kommunizieren (306) per Funk mit dem Netzwerkknoten (200) in der zeitlichen Funkressource, die mit der ersten COT (801) assoziiert ist, durch Senden in der ersten COT, falls das CCA Clearance anzeigt; und
**dadurch gekennzeichnet, dass** das Verfahren ferner Folgendes umfasst:
Empfangen einer gruppengemeinsamen Übertragung (804) von dem Netzwerkknoten (200) in der ersten COT (801) in Reaktion auf eine Übertragung (802) der Funkvorrichtung (100; 1000; 1291; 1292; 1330), die die erste COT (801) initiiert, wobei die gruppengemeinsame Übertragung (804) ein Flag umfasst, das anzeigt, dass die gruppengemeinsame Übertragung zu einer COT gehört, die von einer anderen Funkvorrichtung (100; 1000; 1291; 1292; 1330) initiiert wird, oder zu einer COT gehört, die von dem Netzwerkknoten (200) initiiert wird.

2. Verfahren (300) nach Anspruch 1, wobei das Verfahren (300) semistatische Kanalbelegung und/oder einen Modus für rahmenbasierte Geräte, FBE, implementiert, wobei optional der Netzwerkknoten (200) feste Rahmenperioden, FFPs, zuweist; einen Kanal zum Kommunizieren per Funk (306) unmittelbar vor einer Grenze der FFP für 9 Mikrosekunden abtastet und der Netzwerkknoten (200), falls der Kanal als frei erkannt wird, beim Kommunizieren per Funk (306) mit einer Downlink-Übertragung beginnt, wobei die zeitliche Funkressource, die mit der jeweiligen COT assoziiert ist, eine Leerlaufperiode einer festen Rahmenperiode, FFP, umfasst und die FFP die jeweilige COT und die Leerlaufperiode umfasst.

3. Verfahren (300) nach einem der Ansprüche 1 bis 2, wobei die Funkvorrichtung (100; 1000; 1291; 1292; 1330) in der zeitlichen Funkressource sendet, die mit einer zweiten COT (901) assoziiert ist, wenn die erste COT (801) von der Funkvorrichtung (100; 1000; 1291; 1292; 1330) initiiert wird und die zweite COT (901) von dem Netzwerkknoten initiiert wird.

4. Verfahren (300) nach Anspruch 3, wobei die Funkvorrichtung (100; 1000; 1291; 1292; 1330) Empfangen in der mit der ersten COT (801) assoziierten zeitlichen Funkressource unterlässt, wenn die zweite COT (901) von dem Netzwerkknoten (200) initiiert wird.

5. Verfahren (300) nach einem der Ansprüche 1 bis 4, ferner umfassend:
Empfangen einer Steuernachricht durch die Funkvorrichtung von dem Netzwerkknoten (200), wobei die Steuernachricht mindestens eine Einschränkung der Funkvorrichtung hinsichtlich der Verwendung der mit der ersten COT (801) assoziierten zeitlichen Funkressource und/oder hinsichtlich der Verwendung der mit der zweiten COT (901) assoziierten zeitlichen Funkressource anzeigt.

6. Verfahren (300) nach Anspruch 5, wobei die mindestens eine Einschränkung
a. die Funkvorrichtung (100; 1000; 1291; 1292; 1330) von den Funkvorrichtungen ausschließt, die in der mit der zweiten COT (901) assoziierten zeitlichen Funkressource senden, wenn die Funkvorrichtung (100; 1000; 1291; 1292; 1330) die erste COT (801) initiiert hat; oder
b. der Funkvorrichtung (100; 1000; 1291; 1292; 1330) erlaubt, in der mit der zweiten COT assoziierten zeitlichen Funkressource zu senden, wenn die Funkvorrichtung (100; 1000; 1291; 1292; 1330) die erste COT (801) initiiert hat; oder
c. den Netzwerkknoten (200) vom Senden in der mit der ersten COT (801) assoziierten zeitlichen Funkressource ausschließt, falls der Netzwerkknoten (200) die zweite COT (901) initiiert hat; oder
d. dem Netzwerkknoten (200) Senden in der mit der ersten COT (801) assoziierten zeitlichen Funkressource erlaubt, falls der Netzwerkknoten (200) die zweite COT (901) initiiert hat; oder
e. eine Kombination der Merkmale a und c umfasst; oder
f. eine Kombination der Merkmale a und d umfasst; oder
g. eine Kombination der Merkmale b und c umfasst; oder
h. eine Kombination der Merkmale b und d umfasst.

7. Verfahren (300) nach einem der Ansprüche 5 bis 6, wobei die mindestens eine Einschränkung in einer von einer Downlink-Steuerinformation, DCI, die eines von einem 3GPP-DCI-Format 0_0, 0_1, 0_2, 2_0 und 2_4 umfasst, unter Verwendung von einem von Folgendem angezeigt wird:
einem Feld für den Kanalzugriffstyp;
einer Erweiterung eines zyklischen Präfixes, CP;
einem Einschränkungsfeld in einem Dispositions-DCI-Format 0_0, 0_1 oder 0_2 für einen physikalischen Uplink-Steuerkanal, PUSCH;
einem COT-Dauerindikator im DCI-Format 2_0;
einem Einschränkungsfeld in einer Stornierungs-DCI basierend auf dem DCI-Format 2_4.

8. Verfahren (300) nach einem der Ansprüche 5 bis 7, wobei die Steuernachricht Folgendes anzeigt:
eine Referenzressource, über die eine Uplink-Übertragung storniert werden soll, wobei optional die Referenzressource einer ausgeschlossenen zeitlichen Funkressource, die mit einer von der ersten COT (801) und der zweiten COT (901) assoziiert ist, oder einer ausgeschlossenen Leerlaufperiode entspricht, die mit einer von der ersten COT (801) und der zweiten COT (901) assoziiert ist; und/oder
eine Zeitdauer oder eine Anzahl von Leerlaufperioden oder eine Anzahl von FFPs, während derer die mindestens eine Einschränkung anwendbar ist; und/oder
mindestens eine Kennzeichnung (702) für die zeitliche Funkressource oder die Leerlaufperiode, die mit der zweiten COT (901) assoziiert ist; und/oder
mindestens eine Kennzeichnung (704) für die zeitliche Funkressource oder die Leerlaufperiode, die mit der ersten COT (801) assoziiert ist; und/oder
mindestens eine Kennzeichnung (706) für eine Referenzressource oder eine Ressource, während der die mindestens eine Einschränkung anwendbar ist; und/oder eine Kennung der COT, auf die die mindestens eine Einschränkung anwendbar ist.

9. Verfahren (300) nach einem der Ansprüche 1 bis 8, wobei die Steuernachricht und/oder die gruppengemeinsame Übertragung (804) für jede einer Mehrzahl von COTs ferner eine Assoziierung von zugelassenen Funkvorrichtungen (100; 1000; 1291; 1292; 1330) anzeigt, die in der zeitlichen Funkressource senden dürfen, die mit der jeweiligen COT aus der Mehrzahl von COTs assoziiert ist, und/oder ferner eine Assoziierung von ausgeschlossenen Funkvorrichtungen (100; 1000; 1291; 1292; 1330) anzeigt, die davon ausgeschlossen sind, in der zeitlichen Funkressource zu senden, die mit der jeweiligen COT aus der Mehrzahl von COTs assoziiert ist.

10. Verfahren (300) nach einem der vorhergehenden Ansprüche, wobei das Flag ferner anzeigt, dass die gruppengemeinsame Übertragung (804) zur ersten COT (801) gehört.

11. Verfahren (400) zur Funkkommunikation zwischen einer Funkvorrichtung (100; 1000; 1291; 1292; 1330) und einem Netzwerkknoten (200) eines Funkzugangsnetzwerks, RAN, unter Verwendung einer zeitlichen Funkressource, die mit einer Kanalbelegungszeit, COT, assoziiert ist, wobei das Verfahren (400) von dem Netzwerkknoten (200) durchgeführt wird und Folgendes umfasst:
Bestimmen (402), dass eine erste COT (801) von einer Funkvorrichtung (100; 1000; 1291; 1292; 1330) initiiert wird, umfassend Empfangen einer Uplink-Übertragung von der Funkvorrichtung (100; 1000; 1291; 1292; 1330) in der ersten COT (801);
**dadurch gekennzeichnet, dass** das Verfahren ferner Folgendes umfasst:
Kommunizieren (406) mit der Funkvorrichtung (100; 1000; 1291; 1292; 1330) per Funk in der mit der ersten COT (801) assoziierten zeitlichen Funkressource durch Senden einer gruppengemeinsamen Übertragung in Reaktion auf die empfangene Uplink-Übertragung der Funkvorrichtung (100; 1000; 1291; 1292; 1330), die die erste COT (801) initiiert, wobei die gruppengemeinsame Übertragung (804) ein Flag umfasst, das anzeigt, dass die gruppengemeinsame Übertragung zu einer COT gehört, die von einer anderen Funkvorrichtung (100; 1000; 1291; 1292; 1330) initiiert wird, oder zu einer COT gehört, die von dem Netzwerkknoten (200) initiiert wird.

12. Verfahren (400) nach Anspruch 11, ferner umfassend die Schritte nach einem der Ansprüche 2 bis 10.

13. Funkvorrichtung (100; 1000; 1291; 1292; 1330) zur Funkkommunikation zwischen einer Funkvorrichtung (100; 1000; 1291; 1292; 1330) und einem Netzwerkknoten (200) eines Funkzugangsnetzwerks, RAN, unter Verwendung einer zeitlichen Funkressource, die mit einer Kanalbelegungszeit, COT, assoziiert ist, wobei die Funkvorrichtung (100; 1000; 1291; 1292; 1330) zu Folgendem konfiguriert ist:
Bestimmen (302), ob eine erste COT (801) von der Funkvorrichtung (100; 1000; 1291; 1292; 1330) initiiert wird, wobei das Bestimmen (302), dass die erste COT (801) von der Funkvorrichtung (100; 1000; 1291; 1292; 1330) initiiert wird, Folgendes umfasst:
Durchführen eines Clear Channel Assessment, CCA; und
Kommunizieren (306) per Funk mit dem Netzwerkknoten (200) in der zeitlichen Funkressource, die mit der ersten COT (801) assoziiert ist, durch Senden in der ersten COT, falls das CCA Clearance anzeigt; und,
**dadurch gekennzeichnet, dass** die Funkvorrichtung ferner zu Folgendem konfiguriert ist:
Empfangen einer gruppengemeinsamen Übertragung von dem Netzwerkknoten (200) in Reaktion auf eine Übertragung (802) der Funkvorrichtung (100; 1000; 1291; 1292; 1330), die die erste COT (801) initiiert, wobei die gruppengemeinsame Übertragung (804) ein Flag umfasst, das anzeigt, dass die gruppengemeinsame Übertragung zu einer COT gehört, die von einer anderen Funkvorrichtung (100; 1000; 1291; 1292; 1330) initiiert wird, oder zu einer COT gehört, die von dem Netzwerkknoten (200) initiiert wird.

14. Funkvorrichtung (100; 1100; 1291; 1292; 1330) nach Anspruch 13, die ferner dazu konfiguriert ist, die Schritte nach einem der Ansprüche 2 bis 10 auszuführen.

15. Netzwerkknoten (200) zur Funkkommunikation zwischen einer Funkvorrichtung (100; 1000; 1291; 1292; 1330) und dem Netzwerkknoten (200) eines Funkzugangsnetzwerks, RAN, unter Verwendung einer zeitlichen Funkressource, die mit einer Kanalbelegungszeit, COT, assoziiert ist, wobei der Netzwerkknoten (200) dazu konfiguriert ist, das Verfahren nach einem der Ansprüche 11 bis 12 durchzuführen.

## Revendications

1. Procédé (300) de communication radio entre un dispositif radio (100 ; 1000 ; 1291 ; 1292 ; 1330) et un nœud de réseau (200) d'un réseau d'accès radio, RAN, à l'aide d'une ressource radio temporelle associée à un temps d'occupation de canal, COT, le procédé (300) réalisé par le dispositif radio (100 ; 1000 ; 1291 ; 1292 ; 1330) comprenant :
la détermination (302) qu'un premier COT (801) est initié par le dispositif radio (100 ; 1000 ; 1291 ; 1292 ; 1330), dans lequel la détermination (302) que le premier COT (801) est initié par le dispositif radio (100 ; 1000 ; 1291 ; 1292 ; 1330) comprend : la réalisation d'une évaluation de canal libre, CCA ; et
la communication radio (306) avec le nœud de réseau (200) dans la ressource radio temporelle associée au premier COT (801) par la transmission dans le premier COT si la CCA indique un canal libre ; et
**caractérisé en ce que** le procédé comprend en outre
la réception, dans le premier COT (801), d'une transmission commune de groupe (804), depuis le nœud de réseau (200), en réponse à une transmission (802) du dispositif radio (100 ; 1000 ; 1291 ; 1292 ; 1330) initiant le premier COT (801), dans lequel la transmission commune de groupe (804) comprend un indicateur qui indique que la transmission commune de groupe fait partie d'un COT initié par un autre dispositif radio (100 ; 1000 ; 1291 ; 1292 ; 1330) ou fait partie d'un COT initié par le nœud de réseau (200).

2. Procédé (300) selon la revendication 1, dans lequel le procédé (300) met en œuvre une occupation de canal semi-statique et/ou un mode d'équipement basé sur trame, FBE, facultativement dans lequel le nœud de réseau (200) attribue des périodes de trame fixes, FFP, détecte un canal pour la communication radio (306) pendant 9 microsecondes juste avant une frontière de la FFP, et, s'il est détecté que le canal est libre, le nœud de réseau (200) commence avec une transmission de liaison descendante dans la communication radio (306), dans lequel la ressource radio temporelle associée au COT respectif comprend une période d'inactivité d'une période de trame fixe, FFP, la FFP comprenant le COT respectif et la période d'inactivité.

3. Procédé (300) selon l'une quelconque des revendications 1 et 2, dans lequel le dispositif radio (100 ; 1000 ; 1291 ; 1292 ; 1330) transmet dans la ressource radio temporelle associée à un deuxième COT (901) lorsque le premier COT (801) est initié par le dispositif radio (100 ; 1000 ; 1291 ; 1292 ; 1330) et le deuxième COT (901) est initié par le nœud de réseau.

4. Procédé (300) selon la revendication 3, dans lequel le dispositif radio (100 ; 1000 ; 1291 ; 1292 ; 1330) s'abstient de recevoir dans la ressource radio temporelle associée au premier COT (801) lorsque le deuxième COT (901) est initié par le nœud de réseau (200).

5. Procédé (300) selon l'une quelconque des revendications 1 à 4, comprenant en outre :
la réception, par le dispositif radio, d'un message de commande depuis le nœud de réseau (200), le message de commande indiquant au moins une restriction de l'utilisation, par le dispositif radio, de la ressource radio temporelle associée au premier COT (801) et/ou de l'utilisation de la ressource radio temporelle associée au deuxième COT (901).

6. Procédé (300) selon la revendication 5, dans lequel l'au moins une restriction
a. exclut le dispositif radio (100 ; 1000 ; 1291 ; 1292 ; 1330) des dispositifs radio transmettant dans la ressource radio temporelle associée au deuxième COT (901), lorsque le dispositif radio (100 ; 1000 ; 1291 ; 1292 ; 1330) a initié le premier COT (801) ; ou
b. autorise le dispositif radio (100 ; 1000 ; 1291 ; 1292 ; 1330) à transmettre dans la ressource radio temporelle associée au deuxième COT, lorsque le dispositif radio (100 ; 1000 ; 1291 ; 1292 ; 1330) a initié le premier COT (801) ; ou
c. exclut le nœud de réseau (200) de la transmission dans la ressource radio temporelle associée au premier COT (801), si le nœud de réseau (200) a initié le deuxième COT (901) ; ou
d. autorise le nœud de réseau (200) à transmettre dans la ressource radio temporelle associée au premier COT (801), si le nœud de réseau (200) a initié le deuxième COT (901) ; ou
e. comprend une combinaison des caractéristiques a et c ; ou
f. comprend une combinaison des caractéristiques a et d ; ou
g. comprend une combinaison des caractéristiques b et c ; ou
h. comprend une combinaison des caractéristiques b et d.

7. Procédé (300) selon l'une quelconque des revendications 5 et 6, dans lequel l'au moins une restriction est indiquée dans l'une d'une information de commande de liaison descendante, DCI, comprenant l'un parmi un format de DCI 3GPP 0_0, 0_1, 0_2, 2_0 et 2_4 à l'aide de l'un parmi :
un champ de type d'accès de canal ;
une extension de préfixe cyclique, CP ;
un champ de restriction d'une DCI de planification de format 0_0, 0_1 ou 0_2 pour un canal de commande de liaison montante physique, PUSCH ;
un indicateur de durée de COT dans une DCI de format 2_0 ;
un champ de restriction dans une DCI d'annulation sur la base d'une DCI de format 2_4.

8. Procédé (300) selon l'une quelconque des revendications 5 à 7, dans lequel le message de commande indique :
une ressource de référence sur laquelle une transmission de liaison montante doit être annulée, facultativement dans lequel la ressource de référence correspond à une ressource radio temporelle exclue associée à l'un parmi le premier COT (801) et le deuxième COT (901) ou à une période d'inactivité exclue associée à l'un parmi le premier COT (801) et le deuxième COT (901) ; et/ou
une période de temps ou un nombre de périodes d'inactivité ou un nombre de FFP au cours desquelles l'au moins une restriction est applicable ; et/ou
au moins une étiquette (702) pour la ressource radio temporelle ou une période d'inactivité associée au deuxième COT (901) ; et/ou
au moins une étiquette (704) pour la ressource radio temporelle ou une période d'inactivité associée au premier COT (801) ; et/ou
au moins une étiquette (706) pour une ressource de référence ou une ressource au cours de laquelle l'au moins une restriction est applicable ; et/ou
un identifiant du COT auquel au moins une restriction est applicable.

9. Procédé (300) selon l'une quelconque des revendications 1 à 8, dans lequel le message de commande et/ou la transmission commune de groupe (804) indiquent en outre, pour chacun d'une pluralité de COT, une association de dispositifs radio (100 ; 1000 ; 1291 ; 1292 ; 1330) autorisés qui sont autorisés à transmettre dans la ressource radio temporelle associée au COT respectif parmi la pluralité de COT et/ou indiquent en outre une association de dispositifs radio (100 ; 1000 ; 1291 ; 1292 ; 1330) exclus qui sont exclus de la transmission dans la ressource radio temporelle associée au COT respectif parmi la pluralité de COT.

10. Procédé (300) selon l'une quelconque des revendications précédentes, dans lequel l'indicateur indique en outre que la transmission commune de groupe (804) fait partie du premier COT (801).

11. Procédé (400) de communication radio entre un dispositif radio (100 ; 1000 ; 1291 ; 1292 ; 1330) et un nœud de réseau (200) d'un réseau d'accès radio, RAN, à l'aide d'une ressource radio temporelle associée à un temps d'occupation de canal, COT, le procédé (400) réalisé par le nœud de réseau (200) comprenant :
la détermination (402) qu'un premier COT (801) est initié par le dispositif radio (100 ; 1000 ; 1291 ; 1292 ; 1330) comprenant la réception d'une transmission de liaison montante depuis le dispositif radio (100 ; 1000 ; 1291 ; 1292 ; 1330) dans le premier COT (801) ; **caractérisé en ce que** le procédé comprend en outre
la communication radio (406) avec le dispositif radio (100 ; 1000 ; 1291 ; 1292 ; 1330) dans la ressource radio temporelle associée au premier COT (801) par
la transmission d'une transmission commune de groupe, en réponse à la transmission de liaison montante reçue du dispositif radio (100 ; 1000 ; 1291 ; 1292 ; 1330) initiant le premier COT (801), dans lequel la transmission commune de groupe (804) comprend un indicateur qui indique que la transmission commune de groupe fait partie d'un COT initié par un autre dispositif radio (100 ; 1000 ; 1291 ; 1292 ; 1330) ou fait partie d'un COT initié par le nœud de réseau (200).

12. Procédé (400) selon la revendication 11, comprenant en outre les étapes selon l'une quelconque des revendications 2 à 10.

13. Dispositif radio (100 ; 1000 ; 1291 ; 1292 ; 1330) pour une communication radio entre un dispositif radio (100 ; 1000 ; 1291 ; 1292 ; 1330) et un nœud de réseau (200) d'un réseau d'accès radio, RAN, à l'aide d'une ressource radio temporelle associée à un temps d'occupation de canal, COT, le dispositif radio (100 ; 1000 ; 1291 ; 1292 ; 1330) étant configuré pour :
déterminer (302) si un premier COT (801) est initié par le dispositif radio (100 ; 1000 ; 1291 ; 1292 ; 1330), dans lequel la détermination (302) que le premier COT (801) est initié par le dispositif radio (100 ; 1000 ; 1291 ; 1292 ; 1330) comprend :
la réalisation d'une évaluation de canal libre, CCA ; et
la communication radio (306) avec le nœud de réseau (200) dans la ressource radio temporelle associée au premier COT (801) par la transmission dans le premier COT si la CCA indique un canal libre ; et
**caractérisé en ce que** le dispositif radio est en outre configuré pour
recevoir une transmission commune de groupe depuis le nœud de réseau (200), en réponse à une transmission (802) du dispositif radio (100 ; 1000 ; 1291 ; 1292 ; 1330) initiant le premier COT (801), dans lequel la transmission commune de groupe (804) comprend un indicateur qui indique que la transmission commune de groupe fait partie d'un COT initié par un autre dispositif radio (100 ; 1000 ; 1291 ; 1292 ; 1330) ou fait partie d'un COT initié par le nœud de réseau (200).

14. Dispositif radio (100 ; 1000 ; 1291 ; 1292 ; 1330) selon la revendication 13, configuré en outre pour réaliser les étapes selon l'une quelconque des revendications 2 à 10.

15. Nœud de réseau (200) pour une communication radio entre un dispositif radio (100 ; 1000 ; 1291 ; 1292 ; 1330) et le nœud de réseau (200) d'un réseau d'accès radio, RAN, à l'aide d'une ressource radio temporelle associée à un temps d'occupation de canal, COT, le nœud de réseau (200) étant configuré pour réaliser le procédé selon l'une quelconque des revendications 11 et 12.
